# EUROPÄISCHE PATENTSCHRIFT

(11) **EP 3 171 501 B1**
(45) Veröffentlichungstag und Bekanntmachung des Hinweises auf die Patenterteilung: **21.10.2020**
(21) Anmeldenummer: 16200286.9
(22) Anmeldetag: 23.11.2016
(51) Int. Cl.: H02M 5/45, H02M 5/458, B60W 30/18, H02M 7/797, H02P 27/08, H02P 3/18, H02M 1/12, H02M 1/32, H02M 1/36

(54) **ANTRIEBSSTEUERSYSTEM**
DRIVE CONTROL SYSTEM
SYSTÈME DE COMMANDE DE PROPULSION

(30) Priorität: 23.11.2015 DE 102015120271
(43) Veröffentlichungstag der Anmeldung: 24.05.2017
(73) Patentinhaber: Beckhoff Automation GmbH, 33415 Verl (DE)
(72) Erfinder: PRÜSSMEIER, Uwe, 32657 Lemgo (DE); MISCHE, Christian, 33699 Bielefeld (DE)
(74) Vertreter: Patentanwaltskanzlei WILHELM & BECK

(56) Entgegenhaltungen:
- EP-A1- 1 603 224
- EP-A2- 2 008 860
- EP-A2- 2 214 302
- EP-A2- 2 861 047
- WO-A1-2011/151131
- US-A- 5 642 270
- US-A1- 2014 001 854

## Beschreibung

Die vorliegende Erfindung betrifft ein Antriebssteuersystem.

Antriebssteuersysteme zur Steuerung von Antrieben mit elektrischen Motoren umfassen häufig einen Gleichspannungszwischenkreis, aus welchem die elektrischen Motoren mit einem elektrischen Antriebsstrom versorgt werden. Der Antriebsstrom ist in der Regel ein Wechselstrom, für dessen Erzeugung aus der Gleichspannung des Zwischenkreises in der Regel Endstufenmodule oder Achsmodule mit einer als Wechselrichter ausgebildeten Endstufe eingesetzt werden.

Die elektrische Energie des Gleichspannungszwischenkreises wird in der Regel aus einem elektrischen Versorgungsnetz bereitgestellt und in einem oder mehreren an den Zwischenkreis angeschlossenen Zwischenkreiskondensatoren zwischengespeichert. In der Regel führt das Versorgungsnetz eine mehrphasige Wechselspannung und das Speisen des Zwischenkreises umfasst ein Gleichrichten der Wechselspannung des Versorgungsnetzes mittels eines Einspeisemoduls. Die Zwischenkreiskondensatoren sind in der Regel in dem Einspeisemodul, dem Endstufenmodul oder in beiden Modulen angeordnet. Zur Steuerung mehrerer elektrischer Motoren kann ein Antriebssteuersystem neben dem Einspeisemodul auch mehrere Endstufenmodule umfassen.

Antriebssteuersysteme mit Gleichspannungszwischenkreis können zum einen einkomponentig ausgeführt sein, so dass alle für den Betrieb des Antriebssteuersystems notwendigen Module, insbesondere Einspeisemodul und Endstufenmodul, in einem gemeinsamen Gehäuse des Antriebssteuersystems angeordnet sind. Es sind auch mehrkomponentige Ausführungen derartiger Antriebssteuersysteme bekannt, bei welchen die benötigten Module teilweise oder vollständig in separaten Gehäusen angeordnet und an einen gemeinsamen Gleichspannungszwischenkreis angeschlossen sind. Ein derartiges mehrkomponentiges Motorsteuersystem wird von der Anmelderin beispielsweise als Multiachs-Servosystem der Serie AX8000 angeboten.

Zum Abbremsen eines an das Antriebssteuersystem angeschlossenen elektrischen Motors kann der Motor durch das Antriebssteuersystem generatorisch belastet werden. Dies wird in der Regel durch eine geeignete Ansteuerung des Wechselrichters der Endstufe erreicht. Die bei einer generatorischen Belastung gewonnene elektrische Energie wird in der Regel zunächst in dem Gleichspannungszwischenkreis gespeichert, was zu einer Erhöhung der Zwischenkreisspannung führt. Die bei einer generatorischen Belastung des elektrischen Motors gewonnene und gespeicherte Energie kann bei einem Ausfall des Versorgungsnetzes auch dazu verwendet werden, das Antriebssteuersystem weiter mit elektrischer Energie zu versorgen, bis der Antrieb einen sicheren Zustand erreicht hat, etwa stillsteht. Dies wird unter anderem in der Druckschrift DE19509658A1 beschrieben.

Kann die Zwischenkreisspannung nicht mehr weiter erhöht werden und der Zwischenkreis damit keine weitere Energie mehr aufnehmen, so muss die überschüssig erzeugte elektrische Energie anderweitig abgeführt werden. Neben einer Vernichtung der generatorisch erzeugten Energie im Zwischenkreis, etwa in einem an den Zwischenkreis angeschlossenen Widerstand, kann auch eine Rückspeisung der erzeugten elektrischen Energie in das Versorgungsnetz erfolgen. In der Regel wird die Rückspeisefunktion durch das den Zwischenkreis versorgende und mit dem Versorgungsnetz verbundene Einspeisemodul bereitgestellt.
Die US 2014/001854 A1 offenbart ein Antriebssteuersystem für einen Antrieb mit einem elektrischen Motor und einem elektrischen Versorgungsnetz, bei dem ein Ausgabemodul verwendet wird, welches entweder in einem ersten Betriebsmodus zum Antreiben des Motors oder in einem zweiten Betriebsmodus zum Rückspeisen in einen Gleichspannungszwischenkreis, d.h. einer Batterie, betrieben werden kann. Ein weitere Antriebssteuersystem sind aus der EP 2 214 302 A2 und der EP2 861 047 A2 bekannt. Die EP 1 603 224 A1, EP2 008 860 A2, WO 2011/151131 A1 und die US 5 642 270 A offenbaren Antriebssteuersysteme für elektrische Fahrzeuge, die unabhängig von einem elektrischen Versorgungsnetz betrieben werden.

Aufgabe der vorliegenden Erfindung ist es, verbesserte Module für ein Antriebssteuersystem der genannten Art bereitzustellen. Eine weitere Aufgabe der Erfindung ist es, ein verbessertes Verfahren zum Betrieb eines Antriebssteuersystems anzugeben.

Diese Aufgaben werden durch ein Antriebssteuersystem gemäß Anspruch 1 gelöst. Weitere vorteilhafte Ausführungen sind jeweils in den abhängigen Ansprüchen angegeben.

Ein Ausgabemodul zum Anschluss an einen Gleichspannungszwischenkreis eines Antriebssteuersystems eines elektrischen Antriebs umfasst einen Frequenzumrichter, welcher zwischen den Gleichspannungszwischenkreis, im Folgenden auch einfach als Zwischenkreis bezeichnet, und einen Ausgang des Ausgabemoduls geschaltet ist, und eine Modulsteuerung zur Ansteuerung des Frequenzumrichters. Die Modulsteuerung ist dabei dazu ausgebildet, in einem ersten Betriebsmodus des Ausgabemoduls den Frequenzumrichter derart anzusteuern, dass über den Ausgang ein elektrischer Motor mit einem elektrischen Antriebsstrom aus dem Zwischenkreis angetrieben wird. Des Weiteren ist die Modulsteuerung dazu ausgebildet, in einem zweiten Betriebsmodus des Ausgabemoduls den Frequenzumrichter derart anzusteuern, dass über den Ausgang ein elektrischer Rückspeisestrom aus dem Zwischenkreis in ein elektrisches Versorgungsnetz zurückgespeist wird.

Die hier für einen Frequenzumrichter erläuterten Merkmale gelten in analoger Weise auch für einen Servoverstärker bzw. Servoumrichter.

Das Ausgabemodul kann damit sowohl als Endstufenmodul oder Motorsteuerungsmodul zum Antrieb eines Elektromotors, als auch als Rückspeisemodul zum Rückspeisen von Energie in das Versorgungsnetz verwendet werden. Zur Bereitstellung der Motorsteuerungsfunktion und der Rückspeisefunktion muss damit anstelle zweier unterschiedlicher Arten von Modulen nur noch ein Modultyp entwickelt, produziert und vorgehalten werden. Insbesondere können zur Motorsteuerung und zur Rückspeisung baugleiche Endstufen verwendet werden. Insgesamt ermöglicht ein Ausgabemodul mit Motorsteuerungs- und Rückspeisefunktion eine einfache und kostengünstige Herstellung von Motorsteuerungssystemen.

Der zweite Betriebsmodus mit der Rückspeisefunktion kann beispielsweise alleine durch eine Softwareänderung in dem Ausgabemodul und damit ohne eine Anpassung der Hardware herkömmlicher Ausgabemodule zur Motorsteuerung implementiert werden. Damit wird eine einfache und kostengünstige Ausstattung eines Motorsteuerungssystems mit einer Rückspeisefunktion durch Endanwender ermöglicht.

Die Ausgabemodule können beispielsweise in unterschiedlichen Leistungsklassen produziert werden, beispielsweise als Versionen mit unterschiedlich leistungsfähigen Endstufenkomponenten wie Frequenzumrichtern. Weisen derartige Ausgabemodule einen Betriebsmodus zur Rückspeisung auf, kann durch eine geeignete Auswahl des Ausgabemoduls auf einfache Weise die Leistungsfähigkeit der Rückspeisefunktion angepasst werden.

Das Ausgabemodul umfasst ein Strommessmodul, welches dazu ausgebildet ist, ein Strommesssignal, welches den über den Ausgang fließenden Antriebsstrom bzw. Rückspeisestrom repräsentiert, zu erzeugen. Die Modulsteuerung weist ein Stromregelmodul auf, das dazu ausgebildet ist, auf Grundlage des Strommesssignals in dem ersten Betriebsmodus den über den Ausgang fließenden Antriebsstrom und in dem zweiten Betriebsmodus den über den Ausgang fließenden Rückspeisestrom zu regeln.

Die Steuerung oder Regelung des Rückspeisestroms kann beispielsweise alleine auf Grundlage des Strommesssignals erfolgen und es kann bei dem Ausgabemodul auf eine netzseitige Spannungsmessung verzichtet werden. Dies erlaubt es, einfach und kostengünstig eine Rückspeisung über ein Ausgabemodul zu realisieren. Eine Regelung der Rückspeisung alleine auf Grundlage eines Strommesssignals kann beispielsweise mittels einer Raumzeigertransformation des gemessenen Stromes in ein rotierendes, phasenstarres Koordinatensystem und der Realisierung einer virtuellen Widerstandskennlinie in der transformierten Darstellung erfolgen.

Die Modulsteuerung ist dazu ausgebildet, in dem zweiten Betriebsmodus auf Grundlage des Strommesssignals den über den Ausgang fließenden Rückspeisestrom mit dem elektrischen Versorgungsnetz zu synchronisieren. Dadurch kann das Ausgabemodul in einfacher Weise in verschiedene Regionen mit verschiedenen elektrischen Versorgungsnetz 5A insbesondere verschiedenen Netzfrequenzen, eingesetzt werden.

Bei einer Weiterbildung des Ausgabemoduls ist die Modulsteuerung dazu ausgebildet, in dem ersten Betriebsmodus über einen Steuerausgang des Ausgabemoduls eine Bremse des elektrischen Antriebs zu steuern. In dem zweiten Betriebsmodus ist die Modulsteuerung dazu ausgebildet, über den Steuerausgang eine Schaltvorrichtung zu steuern, um den Ausgang von dem elektrischen Versorgungsnetz zu trennen.

Indem sowohl die Bremse, als auch die Schaltvorrichtung über den Steuerausgang des Ausgabemoduls angesteuert werden, kann für den ersten Betriebsmodus zur Motorsteuerung und für den zweiten Betriebsmodus für die Rückspeisung die gleiche Hardware des Ausgabemoduls verwendet werden. Dadurch können der erste Betriebsmodus und der zweite Betriebsmodus auf einfache und kostengünstige Art und Weise, beispielsweise rein softwareseitig, in dem Ausgabemodul implementiert werden.

Insbesondere sind zur Realisierung der Rückspeisefunktion im Vergleich zu einem reinen Motorsteuerungs- oder Endstufenmodul keine weiteren Bauteile notwendig.

Bei einer Weiterbildung des Ausgabemoduls ist das elektrische Versorgungsnetz, in welches der Rückspeistrom zurückgespeist wird, ein 3-phasiges Wechselstromnetz.

Bei einer Weiterbildung des Ausgabemoduls ist die Modulsteuerung dazu ausgebildet, auf Grundlage eines Parametriersignals einer übergeordneten Steuereinheit des Antriebs in den ersten oder in den zweiten Betriebsmodus versetzt zu werden. Dies erlaubt eine einfache Aktivierung der Betriebsmodi, beispielsweise bei einer Initialisierung der Antriebssteuerung durch die übergeordnete Steuereinheit.

Bei einer Weiterbildung des Ausgabemoduls ist die Modulsteuerung dazu ausgebildet, auf Grundlage eines über einen Parametrieranschluss des Ausgabemoduls empfangenen Parameters in den ersten oder in den zweiten Betriebsmodus versetzt zu werden. Dies erlaubt eine einfache Aktivierung des zweiten Betriebsmodus des Ausgabemoduls durch den Anschluss eines externen Geräts an den Parametrieranschluss. Bei dem externen Gerät kann es sich beispielsweise um ein Netzadaptermodul zur Verbindung des Ausgabemoduls mit dem elektrischen Versorgungsnetz handeln. Das Ausgabemodul kann auch dazu ausgebildet sein, dass der erste Betriebsmodus aktiviert wird, wenn an den Parametrieranschluss ein Motormodul mit einem elektrischen Motor angeschlossen wird. Zur Aktivierung des ersten bzw. zweiten Betriebsmodus können das Netzadaptermodul und das Motormodul beispielsweise über ein elektronisches Typenschild verfügen, welches von dem Ausgabemodul über den Parametrieranschluss ausgelesen werden kann.

Ein Antriebssteuersystem für einen elektrischen Antrieb umfasst ein Ausgabemodul und ein Einspeisemodul, wobei das Einspeisemodul dazu ausgebildet ist, den Gleichspannungszwischenkreis des Antriebssteuersystems mit dem Versorgungsnetz zu verbinden und den Gleichspannungszwischenkreis mit elektrischer Energie aus dem Versorgungsnetz zu versorgen. Das Ausgabemodul ist dazu ausgebildet, im zweiten Betriebsmodus einen elektrischen Rückspeisestrom aus dem Gleichspannungszwischenkreis in das Versorgungsnetz zurückzuspeisen.

Ein derartiges Antriebssteuersystem kann energieeffizient betrieben werden, indem im Zwischenkreis anfallende überschüssige Energie in das Versorgungsnetz zurückgespeist wird. Die überschüssige Energie kann beispielsweise durch einen ebenfalls an das Antriebssteuersystem angeschlossenen Elektromotor, welcher generatorisch belastet wird, erzeugt werden. Indem zur Rückspeisung das Ausgabemodul im zweiten Betriebsmodus verwendet wird, kann die Rückspeisung auf einfache und kostengünstige Weise mittels eines sowohl als Rückspeise- als auch als Motorsteuerungsmodul einsetzbaren Ausgabemoduls realisiert werden.

Eine Weiterbildung des Antriebssteuersystems umfasst eine zwischen den Ausgang des Ausgabemoduls und das Versorgungsnetz geschaltete Glättungsvorrichtung, um den über das Ausgabemodul im zweiten Betriebsmodus in das Versorgungsnetz zurückgespeisten elektrischen Rückspeisestrom zu glätten.

Die Glättungsvorrichtung kann beispielsweise eine oder mehrere Spulen als Speicherdrosseln umfassen. Durch die Glättung des Rückspeisestroms kann ein an das Wechselstromnetz angepasster Rückspeisestromfluss realisiert werden, welcher eine lediglich geringe Belastung des Versorgungsnetzes und geringe Oberwellenstörungen verursacht. Die Glättung des Rückspeisestroms kann beispielsweise bei einer pulsweitenmodulierten Ansteuerung des Wechselrichters dazu dienen, einen sinusförmigen Rückspeisestrom zu erzeugen.

Eine Weiterbildung des Antriebssteuersystems umfasst eine zwischen den Ausgang des Ausgabemoduls und das Versorgungsnetz geschaltete Schaltvorrichtung, um den Ausgang des Ausgabemoduls von dem Versorgungsnetz zu trennen.

Die Schaltvorrichtung kann das Ausgabemodul beispielsweise von dem Versorgungsnetz trennen, während sich die Spannung des Zwischenkreises nach dem Einschalten des Antriebssteuersystems aufbaut. Dadurch wird verhindert, dass die Phasen des Versorgungsnetzes über parasitäre Dioden oder Kapazitäten der Endstufe, wie sie beispielsweise an den Transistoren des Wechselrichters auftreten, während des Aufladens des Zwischenkreises kurzgeschlossen werden und ein schädlich hoher Stromfluss auftritt. Durch den Einsatz der Schaltvorrichtung kann auf eine Ladeschaltung verzichtet werden, welche den Stromfluss über die Endstufe des Ausgabemoduls während des Ladens des Zwischenkreises begrenzt, beispielsweise mittels eines Widerstands.

Bei einer Weiterbildung des Antriebssteuersystems ist die Schaltvorrichtung zur Ansteuerung mit dem Steuerausgang des Ausgabemoduls verbunden.

Bei einer Weiterbildung des Antriebssteuersystems ist das Einspeisemodul getrennt von dem Ausgabemodul ausgeführt. Das Einspeisemodul und das Ausgabemodul können beispielsweise als separate Komponenten des Antriebssteuersystems in eigenständigen Gehäusen angeordnet sein. Die Komponenten des Einspeisemoduls und des Ausgabemoduls können dabei an einen gemeinsamen, die Komponenten verbindenden Zwischenkreis angeschlossen sein. Beispielsweise können an den Modulen Anschlüsse derart angeordnet sein, dass der Zwischenkreis durch die Module durchgeschleift wird. Zwischenkreiskondensatoren zur Aufrechterhaltung der Zwischenkreisspannung können in dem Einspeisemodul, dem Ausgabemodul oder in beiden Modulen angeordnet sein. Alternativ oder zusätzlich können auch als separate Komponenten ausgeführte Kondensatormodule, welche Zwischenkreiskondensatoren enthalten, an den Zwischenkreis angeschlossen sein.

Das Einspeisemodul und das Ausgabemodul können jeweils über ein Datennetzwerk mit einer übergeordneten Steuerung des Antriebssteuersystems verbunden sein. Dabei können das Einspeisemodul und das Ausgabemodul jeweils über ein mit dem jeweiligen Modul verbundenen Netzwerkkabel an das Datennetzwerk angeschlossen sein. Eine Anbindung der Module an das Datennetzwerk kann aber auch über ein Bussystem, beispielsweise ein Rückwandbussystem oder ein durch die Module durchgeschleiftes Klemmenbussystem, welches die Netzwerksignale führt, erfolgen.

Eine Weiterbildung des Antriebssteuersystems umfasst ein weiteres Ausgabemodul, wobei das weitere Ausgabemodul dazu ausgebildet ist, im ersten Betriebsmodus einen an den Ausgang des weiteren Ausgabemoduls angeschlossenen elektrischen Motor mit einem Antriebsstrom aus dem Zwischenkreis des Antriebssteuersystems zu versorgen.

Ein Antriebssteuersystem mit einem im zweiten Betriebsmodus betriebenen Ausgabemodul und einem im ersten Betriebsmodus betriebenen weiteren Ausgabemodul ermöglicht es auf einfache und kostengünstige Art und Weise, ein Antriebssteuersystem mit Rückspeisefunktion und damit energieeffizient zu betreiben. Beispielsweise kann das im zweiten Betriebsmodus betriebene Ausgabemodul dazu verwendet werden, die bei einer generatorischen Belastung des Elektromotors durch das weitere Ausgabemodul freiwerdende Energie in das Versorgungsnetz zurückzuspeisen.

Ein Netzadaptermodul für ein Ausgabemodul umfasst eine zwischen den Ausgang des Ausgabemoduls und das Versorgungsnetz zu schaltende Glättungsvorrichtung, um den über das Ausgabemodul im zweiten Betriebsmodus in das Versorgungsnetz zurückgespeisten elektrischen Rückspeisestrom zu glätten. Das Netzadaptermodul umfasst weiter ein an einen Parametrieranschluss des Ausgabemoduls anschließbares Netzadaptersteuermodul, welches dazu ausgebildet ist, einen das Netzadaptermodul charakterisierenden Parameter an das Ausgabemodul zu übermitteln.

Über das Netzadaptersteuermodul und den Parametrieranschluss kann das Ausgabemodul beispielsweise feststellen, dass dessen Ausgang an das Versorgungsnetz angeschlossen wurde und im zweiten Betriebsmodus als Rückspeisemodul betreiben werden soll. Der Paramater kann beispielsweise eine Produktbezeichnung des Netzadaptermoduls umfassen. Die Glättungsvorrichtung kann, beispielsweise bei einem pulsweitenmodulierten Rückspeisestrom, bewirken, dass ein an den Wechselstrom des Versorgungsnetzes angepasster Rückspeisestrom, etwa ein sinusförmiger Rückspeisestrom, über das Netzadaptermodul ausgegeben wird.

Eine Weiterbildung des Netzadaptermoduls umfasst eine zwischen den Ausgang des Ausgabemoduls und das Versorgungsnetz zu schaltende Schaltvorrichtung, um den Ausgang des Ausgabemoduls von dem Versorgungsnetz zu trennen, wobei die Schaltvorrichtung über einen Steuerausgang des Ausgabemoduls ansteuerbar ist. Über die Schaltvorrichtung kann das Ausgabemodul beispielsweise immer dann von dem Versorgungsnetz getrennt werden, wenn gerade keine Energie zurückgespeist wird. Insbesondere während des Aufbauens der Zwischenkreisspannung nach dem Einschalten des Antriebssteuersystems wird so ein Kurzschluss des Versorgungsnetzes über parasitäre Kapazitäten oder Dioden der Endstufe des Ausgabemoduls verhindert.

Bei einer Weiterbildung des Netzadaptermoduls ist das Netzadaptersteuermodul dazu ausgebildet, die Modulsteuerung über den Parametrieranschluss in den zweiten Betriebsmodus zu versetzen.

Ein Verfahren zum Betrieb eines an einen Gleichspannungszwischenkreis eines Antriebssteuersystems eines elektrischen Antriebs anschließbaren Ausgabemoduls umfasst ein Überprüfen eines Betriebsmodus einer Modulsteuerung des Ausgabemoduls. Falls ein erster Betriebsmodus festgestellt wird, umfasst das Verfahren weiter ein Ansteuern eines Frequenzumrichters des Ausgabemoduls, um über einen Ausgang des Ausgabemoduls einen elektrischen Motor mit einem elektrischen Antriebsstrom aus dem Zwischenkreis anzutreiben. Falls ein zweiter Betriebsmodus festgestellt wird, umfasst das Verfahren weiter ein Ansteuern des Frequenzumrichters des Ausgabemoduls, um über den Ausgang einen elektrischen Rückspeisestrom aus dem Zwischenkreis in ein elektrisches Versorgungsnetz zurückzuspeisen.

Mit einem derartigen Verfahren kann bei dem Antriebssteuersystem auf einfache und kostengünstige Weise sowohl eine Motorsteuerungsfunktion, als auch eine Rückspeisefunktion unter Verwendung gleichartiger Ausgabemodule realisiert werden.

Eine Weiterbildung des Verfahrens umfasst in dem zweiten Betriebsmodus als weiteren Schritt ein Vergleichen einer Spannung des Gleichspannungszwischenkreises mit einer oberen Grenzspannung, wobei das Ansteuern des Frequenzumrichters zur Rückspeisung erfolgt, falls die Spannung des Gleichspannungszwischenkreises die obere Grenzspannung überschreitet. Dies erlaubt eine automatische Rückspeisung überschüssiger Energie aus dem Zwischenkreis in das Versorgungsnetz, sobald die Zwischenkreisspannung die obere Grenzspannung überschreitet.

Eine Weiterbildung des Verfahrens umfasst in dem zweiten Betriebsmodus als weitere Schritte ein Erzeugen eines Strommesssignals, welches einen über den Ausgang des Ausgabemoduls fließenden elektrischen Strom repräsentiert, und ein Synchronisieren eines den Frequenzumrichter ansteuernden Stromregelmoduls des Ausgabemoduls mit dem Versorgungsnetz auf Grundlage des Strommesssignals. Dies ermöglicht es, eine netzsynchrone Rückspeisung alleine mit einer Messung des Rückspeisestroms und ohne eine zusätzliche Spannungsmessung auf Seiten des Versorgungsnetzes zu realisieren.

Eine Weiterbildung des Verfahrens umfasst in dem zweiten Betriebsmodus als weitere Schritte ein Trennen des Ausgangs des Ausgabemoduls von dem Versorgungsnetz mittels einer mit dem Ausgang verbundenen Schaltvorrichtung, falls die Spannung des Gleichspannungszwischenkreises eine untere Grenzspannung unterschreitet, und ein Verbinden des Ausgangs des Ausgabemoduls mit dem Versorgungsnetz mittels der Schaltvorrichtung, ehe das Ansteuern des Frequenzumrichters zur Rückspeisung erfolgt.

Die untere Grenzspannung kann beispielsweise derjenigen Spannung des Zwischenkrieses entsprechen, bei deren Unterschreiten eine Rückspeisung aus dem Zwischenkreis nach Art einer Zweipunktregelung beendet wird. Sie kann auch niedriger sein als die genannte Spannung. Beispielsweise kann die untere Grenzspannung auch einer Spannungsamplitude einer Wechselspannung des Versorgungsnetzes entsprechen.

Insbesondere kann das Ausgabemodul nur dann mit dem Versorgungsnetz verbunden werden, wenn Energie aus dem Zwischenkreis in das Versorgungsnetz zurückgespeist wird. Indem das Ausgabemodul mittels der Schaltvorrichtung von dem Versorgungsnetz getrennt wird, wenn keine Rückspeisung erfolgt, wird insbesondere verhindert, dass bei niedriger Zwischenkreisspannung das Versorgungsnetz über parasitäre Kapazitäten oder Dioden der Endstufe bzw. des Frequenzumrichters des Ausgabemoduls kurzgeschlossen wird und ein unkontrollierter Strom in dem Zwischenkreis und über den Frequenzumrichter fließt.

Die Erfindung wird im Folgenden anhand von Figuren näher erläutert. Dabei zeigen in jeweils schematischer Darstellung:
- Fig. 1: eine schematische Darstellung eines ersten Antriebs mit einem ersten Antriebssteuersystem mit einem ersten und einem ersten weiteren Ausgabemodul;
- Fig. 2: eine schematische Darstellung eines zweiten Antriebs mit einem zweiten Antriebssteuersystems mit einem zweiten Ausgabemodul, einem zweiten weiteren Ausgabemodul und einem Netzadaptermodul;
- Fig. 3: eine schematische Ablaufskizze eines Verfahrens zum Betrieb eines Antriebssteuerungssystems für einen elektrischen Antrieb.

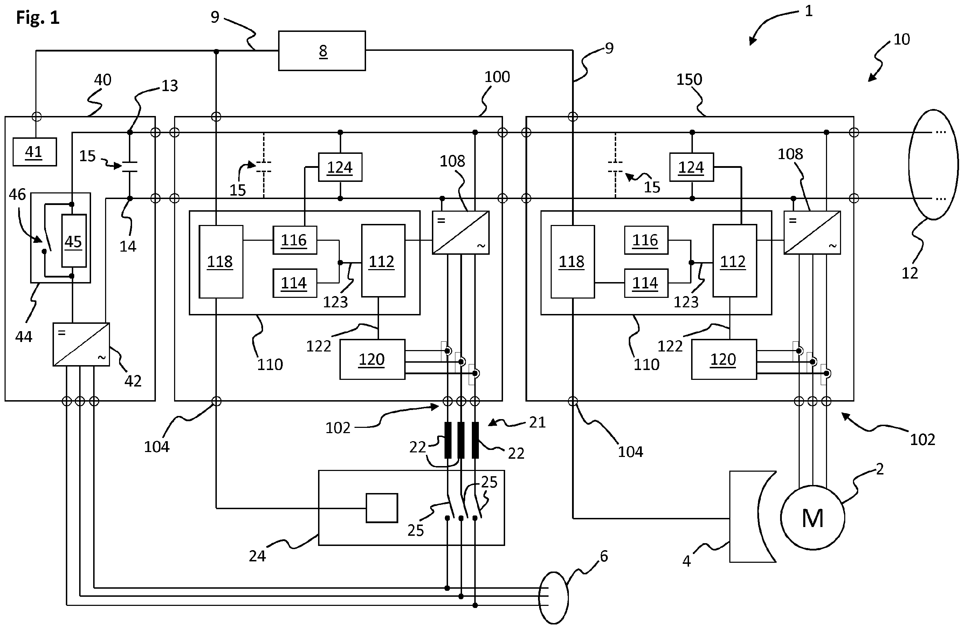

**Figur 1** zeigt einen ersten Antrieb 1 mit einem elektrischen Motor 2 und einem ersten Antriebssteuersystem 10. Das erste Antriebssteuersystem 10 ist über ein Einspeisemodul 40 an ein elektrisches Versorgungsnetz 6 angeschlossen und umfasst neben dem Einspeisemodul 40 ein erstes Ausgabemodul 100, sowie ein erstes weiteres Ausgabemodul 150. Das Einspeisemodul 40, das erste Ausgabemodul 100 und das erste weitere Ausgabemodul 150 sind an einen Gleichspannungszwischenkreis 12 des ersten Antriebssteuersystems 10 angeschlossen. Der Gleichspannungszwischenkreis 12 ist dazu ausgebildet, eine Zwischenkreisspannung zu führen, welche als eine Gleichspannung zwischen einem oberen Potenzialpunkt 13 und einem unteren Potenzialpunkt 14 des Gleichspannungszwischenkreises 12 abfällt. Die Zwischenkreisspannung wird von einem Zwischenkreiskondensator 15 aufrechterhalten, welcher, wie in Figur 1 dargestellt, in dem Einspeisemodul 40 angeordnet sein kann.

Das erste Ausgabemodul 100 und das erste weitere Ausgabemodul 150 sind im Wesentlichen gleich aufgebaut. Bei dem ersten Ausgabemodul 100 und dem ersten weiteren Ausgabemodul 150 kann es sich insbesondere um die gleichen Module handeln. Die einzelnen Elemente des ersten Ausgabemoduls 100 und des ersten weiteren Ausgabemoduls 150 sind daher in Figur 1 mit den gleichen Bezugszeichen gekennzeichnet.

Die ersten Ausgabemodule 100, 150 sind dazu ausgebildet, als Motorsteuerungsmodule oder als Rückspeisemodule betrieben zu werden. Hierzu verfügen die ersten Ausgabemodule 100, 150 über einen ersten Betriebsmodus und einen zweiten Betriebsmodus. In dem ersten Betriebsmodus agieren die ersten Ausgabemodule 100, 150 als Motorsteuerungsmodule und ein über einen Ausgang 102 der ersten Ausgabemodule 100, 150 fließender Ausgangsstrom wird als ein Antriebsstrom einem an den Ausgang 102 angeschlossenen elektrischen Motor 2 zugeführt. Bei dem in Figur 1 dargestellten ersten Antriebssteuersystem 10 wird das erste weitere Ausgabemodul 150 in dem ersten Betriebsmodus betrieben und der elektrische Motor 2 ist an das erste weitere Ausgabemodul 150 angeschlossen. Bei einer generatorischen Belastung eines an die ersten Ausgabemodule 100, 150 angeschlossenen elektrischen Motors 2 kann der Ausgangsstrom bzw. der Antriebsstrom auch in die ersten Ausgabemodule 100, 150 hinein fließen.

Bei dem von den ersten Ausgabemodulen 100, 150 antreibbaren elektrischen Motor 2 kann es sich um einen Wechselstrommotor, beispielsweise um einen mehrphasigen Wechselstrommotor, handeln. Insbesondere kann es sich bei dem Motor 2, wie in Figur 1 dargestellt, um einen dreiphasigen Wechselstrommotor handeln. Der Motor 2 kann beispielsweise als ein Synchronmotor oder als ein Asynchronmotor ausgebildet sein.

In dem zweiten Betriebsmodus agieren die ersten Ausgabemodule 100, 150 als Rückspeisemodule und der über den Ausgang 102 der ersten Ausgabemodule 100, 150 fließende Ausgangsstrom wird als Rückspeisestrom in ein an den Ausgang 102 angeschlossenes Versorgungsnetz 6 eingespeist. Bei dem in Figur 1 dargestellten ersten Antriebssteuersystem 100 ist das Versorgungsnetz 6 an den Ausgang 102 des ersten Ausgabemoduls 100 angeschlossen und das erste Ausgabemodul 100 wird zur Rückspeisung von elektrischer Energie aus dem Gleichspannungszwischenkreis 12 in das Versorgungsnetz 6 in dem zweiten Betriebsmodus betrieben.

Bei dem elektrischen Versorgungsnetz 6 kann es sich beispielsweise um ein Wechselspannungsnetz handeln. Insbesondere kann es sich bei dem elektrischen Versorgungsnetz 6, wie in Figur 1 dargestellt, um ein dreiphasiges Wechselspannungsnetz handeln.

Die ersten Ausgabemodule 100, 150 weisen einen Frequenzumrichter 108 auf, welcher zwischen dem Gleichspannungszwischenkreis 12 der ersten Ausgabemodule 100, 150 und einen Ausgang 102 der ersten Ausgabemodule 100, 150 geschaltet ist. Der Frequenzumrichter 108 ist dazu ausgebildet, die Gleichspannung des Gleichspannungszwischenkreises 12 in eine Wechselspannung bzw. in einen über den Ausgang 102 als Ausgangsstrom fließenden Wechselstrom umzuwandeln. Der Frequenzumrichter 108 ist hierzu gleichspannungsseitig an den Gleichspannungszwischenkreis 12 und wechselspannungsseitig an den Ausgang 102 angeschlossen. Der Zusammenhang zwischen der von dem Frequenzumrichter 108 erzeugten Wechselspannung und dem über den Ausgang 102 fließenden Wechselstrom wird durch die Impedanz einer an den Ausgang 102 angeschlossen elektrischen Last bestimmt.

Der Frequenzumrichter 108 kann dazu ausgebildet sein, die Gleichspannung des Zwischenkreises 12 in eine mehrphasige Wechselspannung bzw. in einen mehrphasigen Wechselstrom als Ausgangsstrom umzuwandeln. Beispielsweise kann der Frequenzumrichter 108 die Zwischenkreisspannung, wie in Figur 1 dargestellt, in eine dreiphasige Wechselspannung umwandeln. Bei dem Frequenzumrichter 108 kann es sich beispielsweise um einen Wechselrichter handeln. Der Wechselrichter kann beispielsweise als eine vollgesteuerte P6-Schaltung ausgeführt sein. Die Halbbrücken des Wechselrichters können beispielsweise Leistungstransistoren, etwa Insulated-Gate Bipolar-Transistoren (IGBT), umfassen. Die Frequenzumrichter 108 bilden Endstufen der ersten Ausgabemodule 100, 150 bzw. des Antriebssteuersystems 10.

Bei dem ersten Antriebssteuersystem 10 ist jede Phase des als dreiphasiges Wechselspannungsnetz ausgebildeten Versorgungsnetzes 6 jeweils über eine Phase des Ausgangs 102 mit einer Phase des dreiphasigen Frequenzumrichters 108 des in dem zweiten Betriebsmodus betriebenen ersten Ausgabemoduls 100 angeschlossen. Analog ist jede Phase des als dreiphasiger Wechselstrommotor ausgebildeten elektrischen Motors 2 über jeweils eine Phase des Ausgangs 102 an jeweils eine Phase des dreiphasigen Frequenzumrichters 108 des in dem ersten Betriebsmodus betriebenen ersten weiteren Ausgabemoduls 150 angeschlossen.

Die ersten Ausgabemodule 100, 150 umfassen eine Modulsteuerung 110, welche dazu ausgebildet ist, den Frequenzumrichter 108 der ersten Ausgabemodule 100, 150 anzusteuern. Über die Ansteuerung des Frequenzumrichters 108 kann der über den Ausgang 102 der ersten Ausgabemodule 100, 150 fließende Ausgangsstrom, also im ersten Betriebsmodus der Antriebsstrom für den elektrischen Motor 2 und im zweiten Betriebsmodus der Rückspeisstrom in das Versorgungsnetz 6, gesteuert werden. Beispielsweise können Ausgangsstromparameter wie die Stärke, die relative Phasenlage oder die Richtung des Ausgangsstroms gesteuert werden.

Zur Bestimmung der Ausgangsstromparameter des Ausgangsstroms umfassen die ersten Ausgabemodule 100, 150 ein Strommessmodul 120. Das Strommessmodul 120 ist dazu ausgebildet, ein den über den Ausgang 102 fließenden Ausgangsstrom repräsentierendes Strommesssignal 122 an die Modulsteuerung 110, insbesondere an das Stromregelmodul 112, zu übermitteln. Bei einem mehrphasigen Ausgangsstrom kann das Strommesssignal 122 den Ausgangsstrom beispielsweise in einer rotierenden, phasenstarren Raumzeigerdarstellung repräsentieren. Das Strommessmodul 120 kann die Ausgangsstromparameter beispielsweise über zwischen dem Wechselrichter 108 und dem Ausgang 102 angeordnete Stromwandler erfassen. Alternativ oder zusätzlich kann das Strommessmodul 120 die Ausgangsstromparameter auch über zwischen dem Frequenzumrichter 108 und dem Ausgang 102 angeordnete Messwiderstände messen.

Bei den ersten Ausgabemodulen 100, 150 erfasst das Strommessmodul 120 die Ausgangsstromparameter an jeder der drei Phasen des Ausgangs 102. Bei alternativen Ausführungsformen kann das Strommessmodul 120 die Ausgangsstromparameter auch nur an zwei Phasen des Ausgangs 102 erfassen und die Parameter der dritten Phase aus den Parametern der beiden anderen Phasen errechnen.

Das Strommessmodul 120 erfasst den Ausgangsstrom bei den ersten Ausgabemodulen 100, 150 zwischen dem Frequenzumrichter 108 und dem Ausgang 102. Alternativ oder zusätzlich kann das Strommessmodul 120 den Ausgangsstrom auch außerhalb der ersten Ausgabemodule 100, 150, beispielsweise an dem Versorgungsnetz 6 oder an dem elektrischen Motor 2 erfassen.

Zur Ansteuerung des Frequenzumrichters 108 umfasst die Modulsteuerung 110 ein Stromregelmodul 112. Das Stromregelmodul 112 regelt die Ausgangsstromparameter des über den Ausgang 102 der ersten Ausgabemodule 100, 150 fließenden Ausgangsstroms. Dabei bilden das Stromregelmodul 112, der Frequenzumrichter 108 und das Strommessmodul 120 eine geschlossene Regelschleife, die den über den Ausgang 102 fließenden Antriebsstrom auf vorgegebene Sollstromwerte 123 einregelt. Die dabei notwendige Ansteuerung des Frequenzumrichters 108 durch die Modulsteuerung 110 kann beispielsweise pulsweitenmoduliert erfolgen.

Werden die ersten Ausgabemodule 100, 150 in dem ersten Betriebsmodus zur Motorsteuerung betrieben, so wie es in Figur 1 für das erste weitere Ausgabemodul 150 der Fall ist, steuern die ersten Ausgabemodule 100, 150 auf Grundlage des Strommesssignals 122 den über den Ausgang 102 ausgegebenen Antriebsstrom für den elektrischen Motor 2. Die hierfür benötigten Sollstromwerte 123 können von einem Drehzahlregelmodul 114 der Modulsteuerung 110 erzeugt und dem Stromregelmodul 112 zugeführt werden. Das Drehzahlregelmodul 114 wiederum ist dazu ausgebildet, die Drehzahl des elektrischen Motors 2 auf eine vorgegebene Solldrehzahl zu regeln. Die Drehzahl des elektrischen Motors 2 kann beispielsweise von einem hier nicht dargestellten Messwertgeber, welcher an dem elektrischen Motor 2 angeordnet ist, erfasst und an das Drehzahlregelmodul 114 übermittelt werden.

Die Modulsteuerung 110 des ersten weiteren Ausgabemoduls 150 kann den Wechselrichter 108 auch derart ansteuern, dass der elektrische Motor 2 generatorisch belastet wird und elektrische Energie aus den Motorwicklungen des Motors 2 in den Gleichspannungszwischenkreis 12 zurückgespeist wird. Dies führt in der Regel zu einem Anstieg der Zwischenkreisspannung, wenn die zurückgeführte Energie in dem Zwischenkreiskondensator 15 gespeichert wird.

Bei alternativen Ausführungsformen kann die Modulsteuerung 110 auch dazu ausgebildet sein, in dem ersten Betriebsmodus den Stromsollwert 123 auf Grundlage einer Positionsregelung des elektrischen Motors 2, oder auf Grundlage einer Geschwindigkeitsregelung des elektrischen Motors 2 zu erzeugen. In diesen Fällen kann die Modulsteuerung 110 alternativ oder zusätzlich zu dem Drehzahlregelmodul 114 ein hier nicht dargestelltes Positionsregelmodul oder ein ebenfalls hier nicht dargestelltes Geschwindigkeitsregelmodul aufweisen.

Die ersten Ausgabemodule 100, 150 weisen ein Spannungsmessmodul 124 auf, welches die zwischen dem oberen Potenzialpunkt 13 und dem unteren Potenzialpunkt 14 des Gleichspannungszwischenkreises 12 abfallende Zwischenkreisspannung misst. Bei dem in dem ersten Betriebsmodus betriebenen ersten weiteren Ausgabemodul 150 übermittelt das Spannungsmessmodul 124 ein die Zwischenkreisspannung repräsentierendes Spannungsmesssignal an das Stromregelmodul 112. Mittels des Spannungsmesssignals kann das Stromregelmodul 112 beispielsweise einen Spannungsabfall im Gleichspannungszwischenkreis 12 erkennen.

Um zu vermeiden, dass bei einem Spannungsabfall im Gleichspannungszwischenkreis 12 die Drehzahl des elektrischen Motors 2 ebenfalls abfällt, kann das Stromregelmodul 112 die Ansteuerung des Frequenzumrichters 108 auf die veränderte Zwischenkreisspannung anpassen, sobald es ein den Spannungsabfall signalisierendes Spannungsmesssignal empfängt. Dadurch kann das Stromregelmodul 112 schneller auf Spannungsschwankungen im Gleichspannungszwischenkreis 12 reagieren, als es der Fall wäre, wenn das Stromregelmodul 112 erst auf eine durch den Abfall der Zwischenkreisspannung verursachte und von dem Strommessmodul 120 gemessene Variation des Ausgangsstroms reagieren würde. Die Reaktion des Stromregelmoduls 112 auf einen Abfall der Zwischenkreisspannung kann beispielsweise mittels einer modellbasierten prädiktiven Regelung realisiert werden, welche unter anderem die induktive und resistive Last des elektrischen Motors 2 berücksichtigt.

Die Modulsteuerung 110 der ersten Ausgabemodule 100, 150 umfasst ein erstes Verarbeitungsmodul 118, welches an eine übergeordnete Steuereinheit 8 des elektrischen Antriebs 1 angebunden ist. Die Anbindung an die übergeordnete Steuereinheit 8 ist über ein Datennetzwerk 9 realisiert. Bei dem Datennetzwerk 9 kann es sich beispielsweise um ein kabelgebundenes Datennetzwerk oder um ein funkbasiertes Datennetzwerk handeln. Insbesondere kann es sich bei dem Datennetzwerk 9 um ein Feldbussystem handeln, etwa um ein EtherCAT-Feldbussystem.

Die übergeordnete Steuereinheit 8 ist dazu ausgebildet, das Antriebssteuersystem 10 und die an das Antriebssteuersystem 10 angeschlossenen Antriebe, beispielsweise den elektrischen Motor 2, zu steuern. Die Steuerung kann beispielsweise auf Grundlage von an die übergeordnete Steuereinheit 8 zurückgemeldeten Zustandsdaten einer den ersten Antrieb 1 umfassenden Industrieanlage erfolgen. Bei der übergeordneten Steuereinheit 8 kann es sich beispielsweise um eine speicherprogrammierbare Steuerung (SPS) oder um einen Industrie-PC mit einem den ersten Antrieb 1 und die den ersten Antrieb 1 umfassende Industrieanlage steuernden Steuerprogramm handeln.

In dem ersten Betriebsmodus der ersten Ausgabemodule 100, 150 empfängt das erste Verarbeitungsmodul 118 von der übergeordneten Steuereinheit 8 über das Datennetzwerk 9 unter anderem die Drehzahlsollwerte für die Drehzahlregelung und übermittelt die Drehzahlsollwerte an das Drehzahlregelmodul 114.

Werden die ersten Ausgabemodule 100, 150 in dem zweiten Betriebsmodus zur Rückspeisung in das Versorgungsnetz 6 betrieben, so wie es bei dem ersten Antriebssteuersystem 10 für das erste Ausgabemodul 100 der Fall ist, steuern die ersten Ausgabemodule 100, 150 auf Grundlage des Strommesssignals 122, welches den von dem Strommessmodul 120 zwischen dem Frequenzumrichter 108 und dem Ausgang 102 gemessenen Stromfluss repräsentiert, den über den Ausgang 102 in das Versorgungsnetz 6 zurückgespeisten Rückspeisestrom.

Bei dem in dem zweiten Betriebsmodus betriebenen ersten Ausgabemodul 100 verwendet die Modulsteuerung 110 den von dem Spannungsmessmodul 124 ermittelten Wert der Zwischenkreisspannung des Gleichspannungszwischenkreises 12, um die Rückspeisung aus dem Gleichspannungszwischenkreis 12 in das Versorgungsnetz 6 zu steuern. Dabei kann die Modulsteuerung 110 beispielsweise die Spannung des Gleichspannungszwischenkreises 12 mit einer oberen Grenzspannung vergleichen, wobei die obere Grenzspannung eine maximal zulässige oder eine festlegbare maximal zulässige Spannung des Gleichspannungszwischenkreises 12 angibt. Bei Überschreiten der oberen Grenzspannung durch die Zwischenkreisspannung kann die Modulsteuerung 110 in dem zweiten Betriebsmodus der Ausgabemodule 100, 150 mit der Rückspeisung von Energie aus dem Gleichspannungszwischenkreis 12 in das Versorgungsnetz 6 beginnen. Nach Art einer Zweipunktregelung kann die Modulsteuerung 110 beispielsweise so lange Energie aus dem Gleichspannungszwischenkreis 12 zurückspeisen, bis die Spannung des Gleichspannungszwischenkreises 12 wieder um eine feste Differenzspannung unter die obere Grenzspannung gefallen ist.

Im zweiten Betriebsmodus der Ausgabemodule 100, 150 wird dem Stromregelmodul 112 der Modulsteuerung 110 der einzuregelnde Sollstromwert 123 für den über den Ausgang 102 fließenden Ausgangsstrom, anders als im ersten Betriebsmodus der ersten Ausgabemodule 100, 150, nicht von dem Drehzahlregelmodul 114, sondern von einem Rückspeiseregelmodul 116 vorgegeben. Im zweiten Betriebsmodus empfängt das Rückspeiseregelmodul 116 der Modulsteuerung 110 das die Spannung des Gleichspannungszwischenkreises 12 repräsentierende Spannungsmesssignal von dem Spannungsmessmodul 124. Das Rückspeiseregelmodul 116 vergleicht die von dem Spannungsmessmodul 124 gemessene Zwischenkreisspannung mit der oberen Grenzspannung. Das Rückspeiseregelmodul 116 übermittelt, falls die Zwischenkreisspannung die obere Grenzspannung überschreitet, den von dem Stromregelmodul 112 als Rückspeisstrom einzustellenden Sollstromwert 123 an das Stromregelmodul 112.

Bei dem in dem zweiten Betriebsmodus der ersten Ausgabemodule 100, 150 betriebenen ersten Ausgabemodul 100 kann die Modulsteuerung 110 den in das Versorgungsnetz 6 zurückgespeisten Rückspeisestrom gemäß einer Kennlinie regeln, welche das Verhältnis von Zwischenkreisspannung zu einzustellendem Rückspeisestrom angibt. Beispielsweise kann der auszugebende Rückspeisestrom proportional zu der Zwischenkreisspannung sein, sodass die Kennlinie durch einen Widerstandswert repräsentiert werden kann. Das Rückspeiseregelmodul 116 und das Stromregelmodul 112 können den Rückspeisestrom dann gemäß dieses virtuellen Widerstandswerts in Abhängigkeit von der Zwischenkreisspannung einstellen.

Die Modulsteuerung 110 des ersten Ausgabemoduls 100 kann bei der Regelung des Rückspeisestroms auch eine Stromanstiegsgeschwindigkeit des Rückspeisestroms steuern, beispielsweise auf einen Maximalwert begrenzen. Dadurch kann eine Stromrampe realisiert werden, bei der zu Beginn der Rückspeisung zunächst lediglich ein kleiner Rückspeisestrom fließt und die Stärke des Rückspeisestroms mit zunehmender Dauer der Rückspeisung ansteigt. Hierdurch wird eine instantane Belastung der Endstufe bzw. des Frequenzumrichters 108 des ersten Ausgabemoduls 100 bei beginnender Rückspeisung vermieden. Die Stromanstiegsgeschwindigkeit bzw. die Rückspeisestromrampe kann beispielsweise durch eine vorgegebene zeitliche Variation des virtuellen Widerstands der Rückspeisekennlinie realisiert werden.

Die obere Grenzspannung, die Kennlinie oder die Stromanstiegsgeschwindigkeit können in der Modulsteuerung 110, beispielsweise in dem Rückspeiseregelmodul 116 oder dem Stromregelmodul 112 hinterlegt sein. Die obere Grenzspannung, die Kennlinie oder die Stromanstiegsgeschwindigkeit können aber auch in dem ersten Verarbeitungsmodul 118 der Modulsteuerung 110 hinterlegt sein oder von dem ersten Verarbeitungsmodul 118 vorgegeben werden. Beispielsweise kann das erste Verarbeitungsmodul 118 die obere Grenzspannung, die Kennlinie oder die Stromanstiegsgeschwindigkeit von der übergeordneten Steuereinheit 8 des ersten Antriebs 1 über das Datennetzwerk 9 empfangen. Dies kann beispielsweise bei einer Initialisierung des ersten Antriebssteuersystems 10 durch die übergeordnete Steuereinheit 8 nach dem Einschalten des ersten Antriebs 1 erfolgen. Während des Betriebs des ersten Antriebs 1 kann die übergeordnete Steuereinheit 8 auch Parameter wie die obere Grenzspannung, die Kennlinie oder die Stromanstiegsgeschwindigkeit, welche die Rückspeisung charakterisieren, verändern.

Die Modulsteuerung 110 kann dazu ausgebildet sein, in dem zweiten Betriebsmodus der ersten Ausgabemodule 100, 150 auf Grundlage des von dem Strommessmodul 120 erzeugten Strommesssignals den über den Ausgang 102 fließenden Rückspeisestrom mit dem elektrischen Versorgungsnetz 6 zu synchronisieren. Bei einer synchronisierten Rückspeisung weisen die von dem Frequenzumrichter 108 erzeugte dreiphasige Wechselspannung und die in dem Versorgungsnetz 6 abfallende Wechselspannung einen derartigen Phasenversatz auf, dass ein im Wesentlichen gleichmäßiger Rückspeisestrom von dem Frequenzumrichter 108 in Richtung des Versorgungsnetzes 6 fließt. Bei einer dreiphasigen sinusförmigen Wechselspannung in dem Versorgungsnetz 6 kann eine synchronisierte Rückspeisung realisiert werden, indem der Frequenzumrichter 108 eine ebenfalls sinusförmige Wechselspannung erzeugt, welche einen vorgegebenen bzw. zeitlich konstanten Phasenversatz gegenüber der Wechselspannung in dem Versorgungsnetz 6 aufweist.

Die Synchronisierung der Rückspeisung mit dem Versorgungsnetz 6 kann bei dem in dem zweiten Betriebsmodus betriebenen ersten Ausgabemodul 100 ohne eine netzseitige Spannungsmessung, welche die Spannung in den Phasen des Versorgungsnetzes 6 misst, erfolgen. Die Modulsteuerung 110 kann den Frequenzumrichter 108 bei beginnender Rückspeisung mit einem festgelegten oder mit einem zufälligen Phasenwinkel, der zunächst unabhängig ist von der Phasenlage der Wechselspannung in dem Versorgungsnetz 6, ansteuern. Sollten Frequenzumrichter 108 und Versorgungsnetz 6 nicht miteinander synchronisiert sein, so fließt kurzzeitig ein hoher Rückspeisestrom über den Ausgang 102. Dieser Rückspeisestrom wird von dem Strommessmodul 120 an die Modulsteuerung 110 zurückgemeldet und die Modulsteuerung 110 variiert den Phasenwinkel des Frequenzumrichters 108 so lange, bis sich im Wesentlichen ein konstanter und begrenzter Stromfluss über den Ausgang 102 einstellt.

Die ersten Ausgabemodule 100, 150 verfügen mit dem Stromregelmodul 112, dem Strommessmodul 120 und dem Spannungsmessmodul 124 über einen schnellen Stromregelkreis zur Steuerung des über den Ausgang 102 fließenden Ausgangsstroms. Beispielsweise kann die Modulsteuerung 110, insbesondere das Stromregelmodul 112, und/oder das Strommessmodul 120 und/oder das Spannungsmessmodul 124 als integrierte Schaltkreise ausgeführt sein. Beispielsweise können die Modulsteuerung 110 und/oder das Strommessmodul 120 und/oder das Spannungsmessmodul 124 als Field Programmable Gate Array-(FPGA)-Schaltungen ausgeführt sein.

Die ersten Ausgabemodule 100, 150 weisen einen Steuerausgang 104 auf, welcher mit der Modulsteuerung 110 verbunden ist. Beispielsweise kann der Steuerausgang 104 mit dem ersten Verarbeitungsmodul 118 verbunden sein. In dem ersten Betriebsmodus können die ersten Ausgabemodule 100, 150 über den Steuerausgang 104 eine Bremse 4 des elektrischen Motors 2 ansteuern. So ist bei dem ersten Antriebssteuersystem 10 eine Bremse 4 des elektrischen Motors 2 an den Steuerausgang 104 des ersten weiteren Ausgabemoduls 150 angeschlossen. Bei der Bremse 4 kann es sich beispielsweise um eine elektromechanische Haltebremse handeln. Mittels der Bremse 4 kann der elektrischen Motor 2 in einem gesicherten Zustand gehalten werden, beispielsweise festgesetzt werden. Alternativ oder zusätzlich kann der elektrische Motor 2 mittels der Bremse 4 bei einem Ausfall des Antriebsstroms im Rahmen einer Notbremsung abgebremst werden.

Das erste Verarbeitungsmodul 118 kann die Bremse 4 beispielsweise auf Grundlage von Steuerdaten ansteuern, welche das erste Verarbeitungsmodul 118 über das Datennetzwerk 9 von der übergeordneten Steuereinheit 8 des ersten Antriebs 1 empfängt. Alternativ oder zusätzlich kann das erste Verarbeitungsmodul 118 die Bremse 4 auf Grundlage von in dem ersten weiteren Ausgabemodul 150 vorliegenden oder erzeugten Daten ansteuern.

Bei dem ersten Antrieb 1 ist der Ausgang 102 des in dem zweiten Betriebsmodus betriebenen ersten Ausgabemoduls 100 mit dem Versorgungsnetz 6 über eine Glättungsvorrichtung 21 und über eine Schaltvorrichtung 24 verbunden, wobei die Glättungsvorrichtung 21 und die Schaltvorrichtung 24 in Reihe geschaltet sind. Die Glättungsvorrichtung 21 ist dazu ausgebildet, den über das erste Ausgabemodul 100 aus dem Zwischenkreis 12 in das Versorgungsnetz 6 zurückgespeisten Rückspeisestrom zu glätten. Dadurch kann beispielsweise bei einer pulsweitenmodulierten Regelung des Rückspeisestroms, etwa durch eine pulsweitenmodulierte Steuerung des Frequenzumrichters 108, ein geglätteter und beispielsweise im Wesentlichen sinusförmiger Rückspeisestrom erzeugt werden.

Die Glättungsvorrichtung 21 kann beispielsweise Spulenbauelemente als Speicherdrosseln 22 umfassen. Dabei kann, wie in Fig. 1 dargestellt, jeweils eine der Speicherdrosseln 22 in jeder einzelnen der Phasen des Ausgangs 102 angeordnet sein. Die in Fig. 1 dargestellte Glättungsvorrichtung 21 umfasst drei Speicherdrosseln 22, die jeweils an einer der drei Phasen des Ausgangs 102 des ersten Ausgabemoduls 100 angeschlossen sind.

Die Schaltvorrichtung 24 ist dazu ausgebildet, den Ausgang 102 des ersten Ausgabemoduls 100 von dem Versorgungsnetz 6 zu trennen. Hierzu weist die Schaltvorrichtung 24 Schalter 25 auf, welche zwischen den Ausgang 102 und das Versorgungsnetz 6 geschaltet sind. Insgesamt weist die Schaltvorrichtung 24 drei Schalter 25 auf, einen für jede der drei Phasen des Ausgangs 102. Bei der Schaltvorrichtung 24 kann es sich beispielsweise um einen oder mehrere Schütze handeln.

Die Leistungsfähigkeit der Schaltvorrichtung 24 und der Glättungsvorrichtung 21 sind an die Leistungsklasse der Endstufe bzw. des Frequenzumrichters 108 des ersten Ausgabemoduls 100 angepasst. Bei der Schaltvorrichtung 24 und der Glättungsvorrichtung 21 kann es sich beispielsweise um von einem Anwender des Antriebs 1 bereitgestellte und an das erste Antriebssteuersystem 10 angeschlossene Standard-Komponenten handeln, die als von dem ersten Ausgabemodul 100 separate Komponenten ausgeführt sind.

Bei dem in dem zweiten Betriebsmodus betriebenen ersten Ausgabemodul 100 wird, anders als bei dem in dem ersten Betriebsmodus betriebenen ersten weiteren Ausgabemodul 150, anstelle der Bremse 4 die Schaltvorrichtung 24 zur Ansteuerung mit dem Steuerausgang 104 des ersten Ausgabemoduls 100 verbunden. Dadurch kann die Schaltvorrichtung 24 durch die Modulsteuerung 110, insbesondere durch das erste Verarbeitungsmodul 118, des ersten Ausgabemoduls 100 gesteuert werden und die Schalter 25 durch das Steuermodul 110 geöffnet oder geschlossen werden.

Indem die Modulsteuerung 110 das erste Ausgabemodul 100 mittels der Schaltvorrichtung 24 von dem Versorgungsnetz 6 trennt, kann verhindert werden, dass das Versorgungsnetz 6 bei niedriger Zwischenkreisspannung in dem Gleichspannungskreis 12 über parasitäre Kapazitäten oder Dioden des Frequenzumrichters 108 kurzgeschlossen wird. Hierzu kann das erste Ausgabemodul 100 insbesondere dann von dem Versorgungsnetz 6 mittels der Schaltvorrichtung 24 getrennt werden, solange die Spannung des Gleichspannungszwischenkreises 12 nach einem Einschalten des ersten Antriebs 1 eine Betriebsspannung noch nicht erreicht hat.

Die Modulsteuerung 110 kann beispielsweise dazu ausgebildet sein, das erste Ausgabemodul 100 erst dann mit dem elektrischen Versorgungsnetz 6 durch ein Schließen der Schaltvorrichtung 24 zu verbinden, wenn die Spannung des Gleichspannungszwischenkreises 12 die obere Grenzspannung übersteigt und ein Rückspeisestrom in das Versorgungsnetz 6 zurückgespeist wird. Bei einer Steuerung der Rückspeisung nach Art einer Zweipunktregelung, kann die Modulsteuerung 110 das erste Ausgabemodul 100 wieder von dem Versorgungsnetz 6 trennen, sobald die Gleichspannung des Gleichspannungszwischenkreises 12 unter eine untere Grenzspannung gefallen ist.

Die untere Grenzspannung kann beispielsweise der Spannung im Gleichspannungszwischenkreis 12 entsprechen, bei der die Rückspeisung in das Versorgungsnetz 6 wieder beendet wird. In solch einem Fall würde das erste Ausgabemodul 100 nur dann über die Schaltvorrichtung 24 mit dem Versorgungsnetz verbunden werden, wenn die Rückspeisefunktion aktiv ist. Dies minimiert bei inaktiver Rückspeisung Leistungsverluste in dem Frequenzumrichter 108.

Alternativ kann die untere Grenzspannung auch derart bemessen sein, dass die Modulsteuerung 110 das erste Ausgabemodul 100 auch lediglich dann mittels der Schaltvorrichtung 24 von dem Versorgungsnetz 6 trennen, wenn die Spannung des Gleichspannungszwischenkreises 12 unter einem unteren Grenzwert liegt, bei welchem die Gefahr eines Kurzschlusses des Versorgungsnetzes 6 über den Frequenzumrichter 108 besteht. Der untere Grenzwert kann beispielsweise niedriger sein als die Betriebsspannung des Gleichspannungszwischenkreises 12. Beispielsweise kann der untere Grenzwert der Spannungsamplitude der Wechselspannung des Versorgungsnetzes 6 entsprechen oder geringer als diese Spannungsamplitude sein.

Die ersten Ausgabemodule 100, 150 können dazu ausgebildet sein, Betriebsdaten der ersten Ausgabemodule 100, 150 an die übergeordnete Steuereinheit 8 zu übermitteln. Bei dem in dem ersten Betriebsmodus betriebenen ersten weiteren Ausgabemodul 150 kann es sich bei den Betriebsdaten beispielsweise um den momentanen Ausgangsstrom, die aus dem Gleichspannungszwischenkreis 12 ausgegebene elektrische Leistung, den Grad der Auslastung der Endstufe bzw. des Frequenzumrichters 108 der ersten Ausgabemodule 100, 150, die von dem Spannungsmessmodul 124 gemessene Zwischenkreisspannung oder um einen Status der ersten Ausgabemodule 100, 150 handeln.

Bei dem in dem zweiten Betriebsmodus betriebenen ersten Ausgabemodul 100 kann der Status beispielsweise Auskunft darüber geben, ob ein Rückspeisestrom ausgegeben wird oder nicht, das erste Ausgabemodul 100 zur Rückspeisung bereit ist oder ein Fehler des ersten Ausgabemoduls 100 vorliegt. Die von dem ersten Ausgabemodul 100 zurückgemeldeten Betriebsdaten können auch eine aus der Zwischenkreisspannung und dem Rückspeisestrom ermittelte Netzspannung des Versorgungsnetzes 6 umfassen.

Der Betriebsmodus der Ausgabemodule 100, 150 wird bei dem ersten Antrieb 1 jeweils über ein Parametriersignal festgelegt, welches von der übergeordneten Steuereinheit 8 über das Datennetzwerk 9 an die Modulsteuerungen 110 der ersten Ausgabemodule 100, 150 übermittelt wird. Das Parametriersignal legt damit fest, dass das erste Ausgabemodul 100 in dem zweiten Betriebsmodus als Rückspeisemodul betrieben wird und dass das erste weitere Ausgabemodul 150 in dem ersten Betriebsmodus als Motorsteuerungsmodul betrieben wird. Zusätzlich können den ersten Ausgabemodulen 100, 150 von der übergeordneten Steuereinheit 8 über das Datennetzwerk 9 in dem ersten bzw. dem zweiten Betriebsmodus benötigte Parameter übermittelt werden. Außerdem können die ersten Ausgabemodule 100, 150 durch die übergeordnete Steuereinheit 8 über das Datennetzwerk 9 ein- oder ausgeschaltet werden.

Bei den für den ersten Betriebsmodus benötigten Parametern kann es sich beispielsweise um die Solldrehzahl, die Sollposition oder die Sollgeschwindigkeit des Motors 2 handeln. Bei den für den zweiten Betriebsmodus benötigten Parametern kann es sich beispielsweise um die obere Grenzspannung, die Differenzspannung, die untere Grenzspannung, den virtuellen Widerstand, dessen Kennlinie oder den Grenzwert für die Stromanstiegsgeschwindigkeit des Rückspeisestroms handeln. Die Parameter können in den ersten Ausgabemodulen 100, 150 auch teilweise oder vollständig hinterlegt sein. In diesem Fall können die hinterlegten Parameter beispielsweise durch die übergeordnete Steuereinheit 8 im Betrieb überschrieben werden.

Alternativ kann der Betriebsmodus der ersten Ausgabemodule 100, 150 auch in den ersten Ausgabemodulen 100, 150, beispielsweise in den Modulsteuerungen 110, insbesondere in den ersten Verarbeitungsmodulen 118, hinterlegt sein. Der in den Modulsteuerungen 110 hinterlegte Betriebsmodus kann beispielsweise mittels eines an den ersten Ausgabemodulen 100, 150 angeordneten Schalters durch den Benutzer des ersten Antriebssteuersystems 10 festgelegt werden. Alternativ kann in den ersten Ausgabemodulen 100, 150 auch ein Standardbetriebsmodus hinterlegt sein, welcher von der übergeordneten Steuereinheit 8 über das Datennetzwerk 9 überschrieben oder geändert werden kann. Die Einstellung der Betriebsmodi mittels des Parametriersignals durch die übergeordnete Steuereinheit 8 kann beispielsweise nach dem Einschalten des ersten Antriebs 1 bei einer Parametrisierung des ersten Antriebssteuersystems 10 erfolgen.

Die Zwischenkreisspannung des Gleichspannungszwischenkreises 12 wird durch das Einspeisemodul 40 bereitgestellt und mittels eines oder mehrerer Zwischenkreiskondensatoren 15 aufrechterhalten. Die Zwischenkreiskondensatoren 15 sind zwischen dem oberen Potenzialpunkt 13 und dem unteren Potenzialpunkt 14 des Gleichspannungszwischenkreises 12 angeordnet. Bei dem ersten Antriebssteuersystem 10 ist ein Zwischenkreiskondensator 15 in dem Einspeisemodul 40 angeordnet. Alternativ oder zusätzlich kann der Zwischenkreiskondensator 15 auch jeweils in den ersten weiteren Ausgabemodulen 100, 150 angeordnet sein. Es können auch einer oder mehrere Zwischenkreiskondensatoren 15 in einem eigenen, an den Gleichspannungszwischenkreis 12 angeschlossenen Kondensatormodul angeordnet sein. Das Kondensatormodul kann bei einem mehrkomponentigen Antriebssteuersystem 10 beispielsweise in einem eigenen Gehäuse ausgeführt sein.

Das Einspeisemodul 40 ist an ein elektrisches Versorgungsnetz 6 angeschlossen. Zur Erzeugung der Zwischenkreisspannung umfasst das Einspeisemodul 40 einen Gleichrichter 42, welcher zwischen das Versorgungsnetz 6 und den Gleichspannungszwischenkreis 12 geschaltet ist. Bei dem Gleichrichter 42 kann es sich beispielsweise um einen vollgesteuerten Brückengleichrichter handeln.

Das Einspeisemodul 40 umfasst außerdem eine Ladeschaltung 44, welche zwischen den Gleichrichter 42 und den oberen Potenzialpunkt 13 des Gleichspannungszwischenkreises 12 geschaltet ist. Bei alternativen Ausführungsformen kann die Ladeschaltung 44 auch zwischen den Gleichrichter 42 und den unteren Potenzialpunkt 14 des Gleichspannungszwischenkreises 12 geschaltet sein.

Die Ladeschaltung 44 ist dazu ausgebildet, einen Stromfluss in den Gleichspannungszwischenkreis 12 nach dem Einschalten des ersten Antriebssteuersystems 10 zu begrenzen, solange der Gleichspannungszwischenkreis 12 seine Betriebsspannung noch nicht erreicht hat. Zur Begrenzung des Ladestroms des Gleichspannungszwischenkreises 12 umfasst die Ladeschaltung 44 einen zwischen den Gleichrichter 42 und den Gleichspannungszwischenkreis 12 geschalteten Widerstand 45. Der Widerstand 45 kann mittels eines zu dem Widerstand 45 parallel geschalteten Schalters 46 überbrückt werden. Dies kann beispielsweise erfolgen, sobald die Spannung des Gleichspannungszwischenkreises 12 nach dem Einschalten des ersten Antriebssteuersystems 10 auf die Betriebsspannung angestiegen ist.

Das Einspeisemodul 40 umfasst eine Einspeisemodulsteuerung 41, welche über das Datennetzwerk 9 mit der übergeordneten Steuereinheit 8 des ersten Antriebs 1 verbunden ist. Die Einspeisemodulsteuerung 41 kann über das Datennetzwerk 9 von der übergeordneten Steuereinheit 8 beispielsweise Datensignale empfangen, mittels derer das Einspeisemodul 40 eingeschaltet wird, die Betriebsspannung des Gleichspannungszwischenkreises 12 festgelegt wird oder ein Maximalwert und/oder ein Minimalwert für die Zwischenkreisspannung vorgegeben wird. Die Einspeisemodulsteuerung 41 kann über das Datennetzwerk 9 Datensignale an die übergeordnete Steuereinheit 8 übermitteln, welche unter anderem die momentane Zwischenkreisspannung oder den Schaltzustand des Schalters 46 oder die in den Gleichspannungszwischenkreis 12 eingespeiste Leistung repräsentieren.

Neben dem ersten Ausgabemodul 100 und dem ersten weiteren Ausgabemodul 150 kann das erste Antriebssteuersystem 10 weitere Ausgabemodule aufweisen, welche ebenfalls an den Gleichspannungszwischenkreis 12 angeschlossen und wie die ersten Ausgabemodule 100, 150 ausgebildet sind. Damit können die an den Gleichspannungszwischenkreis 12 angeschlossenen Ausgabemodule beispielsweise mehrere Elektromotoren ansteuern, etwa um ein Mehrachs-Antriebssystem zu realisieren, oder eine parallele Rückspeisung über mehrere Ausgabemodule realisieren. Die ersten Ausgabemodule 100, 150 können auch als Achsmodule des Antriebssteuersystems 10 bezeichnet werden.

Die ersten Ausgabemodule 100, 150 und das Einspeisemodul 40 können als eigenständige Komponenten oder Baugruppen des ersten Antriebssteuersystems 10 in jeweils eigenen Gehäusen ausgeführt sein. Ein Anschluss an den Gleichspannungszwischenkreis 12 kann beispielsweise über ein stromführendes und die Gehäuse verbindendes Verbindungssystem, etwa ein Steckverbindungssystem, erfolgen. Auch kann die Verbindung von Modulen über Einzeladern oder Mehraderleitungen erfolgen. Alternativ oder zusätzlich können auch zwei oder mehr Ausgabemodule, die ausgebildet sind wie die ersten Ausgabemodule 100, 150, in einem physikalischen Gehäuse integriert werden. In diesem Fall können die integrierten Module unabhängige Modulsteuerungen 110 und unabhängige Frequenzumrichter 108 aufweisen. Auch kann ein Gehäuse mit mehreren ersten Ausgabemodulen 100, 150 einen den Ausgabemodulen gemeinsamen Kühlkörper, einen gemeinsamen Zwischenkreiskondensator 15 oder ein gemeinsames erstes Verarbeitungsmodul 118 zur Anbindung an das Datennetzwerk 9 und die übergeordnete Steuereinheit 8 aufweisen.

Alternativ können auch alle oder ein Teil der Module 40, 100, 150 des ersten Antriebssteuersystems 10 und/oder die übergeordnete Steuereinheit 8 in einem gemeinsamen Gehäuse angeordnet sein. Insbesondere bei einer derartigen Ausführung kann das Datennetzwerk 9 als Rückwandbus ausgebildet sein.

Im Sinne einer "load-balancing" Funktion können die Motorsteuerungs- und Rückspeisefunktionen auf die Ausgabemodule derart aufgeteilt sein, dass im Normalbetrieb die energetische Belastung der Frequenzumrichter 108 möglichst günstig über alle ersten Ausgabemodule 100, 150 verteilt ist. Beispielsweise können bei einem mehrkomponentigen Aufbau zwei Ausgabemodule in unterschiedlichen Gehäusen zur generatorischen Belastung des Motors 2 und zur gleichzeitigen Rückspeisung des dabei generierten elektrischen Stroms in das Versorgungsnetz 6 verwendet werden.

Alternativ können auch zur generatorischen Belastung des Motors 2 und zur Rückspeisung der gewonnenen Energie erste Ausgabemodule 100, 150 verwendet werden, die zusammen in einem Gehäuse angeordnet sind. Dabei kann die Belastung der Zwischenkreiskondensatoren 15 auf den Zwischenkreiskondensator 15 in dem betreffenden Gehäuse beschränkt werden und der Rückspeisestrom muss in dem Gleichspannungszwischenkreis 12 nicht über Modulverbindungen zwischen einzelnen Modulgehäusen fließen.

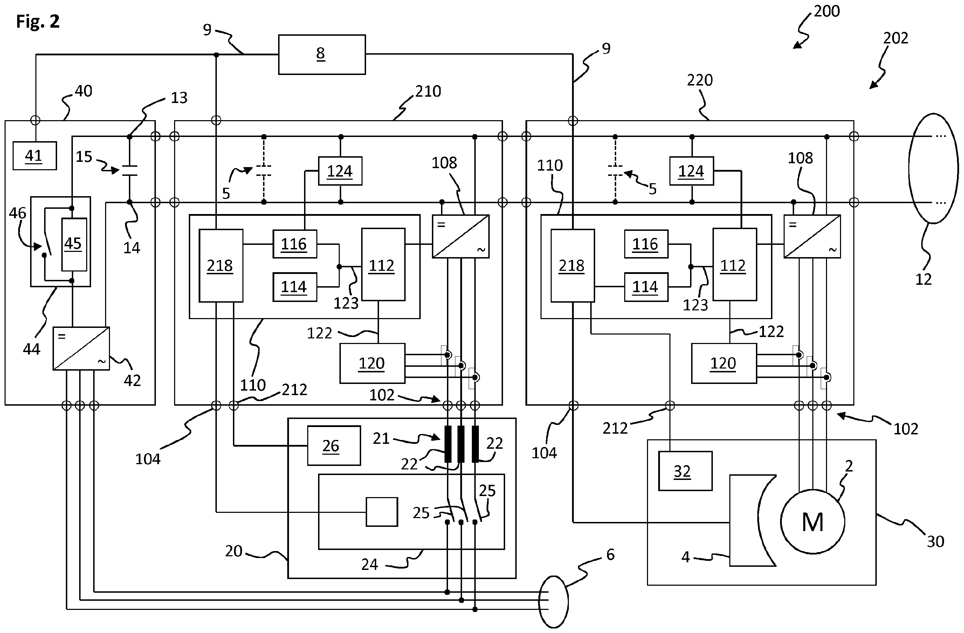

**Figur** 2 zeigt eine schematische Darstellung eines zweiten Antriebs 200 mit einem zweiten Antriebssteuersystem 202. Soweit im Folgenden keine Unterschiede beschrieben werden, sind der zweite Antrieb 200 und das zweite Antriebssteuersystem 202 ausgebildet wie der erste Antrieb 1 bzw. das erste Antriebssteuersystem 10. Insbesondere umfasst das zweite Antriebssteuersystem 202 den Gleichspannungszwischenkreis 12 und das zwischen den Gleichspannungszwischenkreis 12 und das Versorgungsnetz 6 geschaltete Einspeisemodul 40.

Anstelle der ersten Ausgabemodule 100, 150 umfasst das zweite Antriebssteuersystem 202 ein zweites Ausgabemodul 210 und ein zweites weiteres Ausgabemodul 220. Soweit im Folgenden keine Unterschiede beschrieben werden, sind die zweiten Ausgabemodule 210, 220 ausgebildet wie die ersten Ausgabemodule 100, 150. Das zweite Ausgabemodul 210 wird, wie das erste Ausgabemodul 100, in dem zweiten Betriebsmodus der Ausgabemodule 100, 150, 210, 220 als Rückspeisemodul eingesetzt, um elektrische Energie aus dem Gleichspannungszwischenkreis 12 in das an den Ausgang 102 des zweiten Ausgabemoduls 210 angeschlossene Versorgungsnetz 6 zurückzuspeisen. Das zweite weitere Ausgabemodul 220 wird, wie das erste weitere Ausgabemodul 150, in dem ersten Betriebsmodus der Ausgabemodule 100, 150, 210, 220 betrieben, um den an den Ausgang 102 des zweiten weiteren Ausgabemodul 220 angeschlossenen elektrischen Motor 2 des zweiten Antriebs 200 aus dem Gleichspannungszwischenkreis 12 mit Antriebsstrom zu versorgen.

Die zweiten Ausgabemodule 210, 220 verfügen, anders als die ersten Ausgabemodule 100, 150, neben dem Ausgang 102 und dem Steuerausgang 104 über einen Parametrieranschluss 212. Die zweiten Ausgabemodule 210, 220 sind dazu ausgebildet, über einen über den Parametrieranschluss 212 empfangenen Parameter in den ersten oder den zweiten Betriebsmodus versetzt zu werden.

Anders als bei dem ersten Antrieb 1 sind der elektrische Motor 2 und dessen Bremse 4, welche von dem zweiten weiteren Ausgabemodul 220 über dessen Steuerausgang 104 angesteuert wird, in einem Motormodul 30 des zweiten Antriebs 200 angeordnet. Auch sind die Glättungsvorrichtung 21 und die Schaltvorrichtung 24 bei dem zweiten Antrieb 200 in Reihe geschaltet in einem Netzadaptermodul 20 angeordnet.

Bei dem Motormodul 30 und oder dem Netzadaptermodul 20 kann es sich um eigenständige Komponenten des zweiten Antriebs 200 handeln, welche in von den restlichen Komponenten, insbesondere von den zweiten Ausgabemodulen 210, 220, getrennt ausgeführten Gehäusen angeordnet sind. Abgesehen von der Anordnung in dem Motormodul 30 und dem Netzadaptermodul 20 erfolgen die Ansteuerung der Bremse 4 und der Schaltvorrichtung 24 über den Steuerausgang 104, die Steuerung des Motors 2 und die Rückspeisung in das Versorgungsnetz 6 bei dem zweiten Antrieb 200 so, wie es im Zusammenhang mit dem ersten Antrieb 1 beschrieben wurde.

Die für die geregelte Ansteuerung des Frequenzumrichters 108 erforderliche Strommessung des Ausgangsstroms durch das Strommessmodul 120 kann bei dem zweiten Antriebssteuersystem 202 anstelle zwischen dem Frequenzumrichter 108 und dem Ausgang 102 auch in dem Motormodul 30 und/oder in dem Netzadaptermodul 20 erfolgen. Beispielsweise können Sensorleitungen des Strommessmoduls 120 zu dem Motormodul 30 oder dem Netzadaptermodul 20 geführt werden oder es kann das Strommessmodul 120 in dem Motormodul 30 oder in dem Netzadaptermodul 20 angeordnet werden.

Neben der Bremse 4 und dem elektrischen Motor 2 umfasst das Motormodul 30 eine Motormodulsteuereinheit 32. Bei der Motormodulsteuereinheit 32 kann es sich um eine elektronische Schaltung mit einer Verarbeitungseinheit, einer Kommunikationseinheit, und einem Speicher handeln. Beispielsweise kann die Motormodulsteuereinheit 32 als ein integrierter Schaltkreis ausgebildet sind.

Die Motormodulsteuereinheit 32 ist über den Parametrieranschluss 212 des zweiten weiteren Ausgabemoduls 220 mit der Modulsteuerung 110 des zweiten weiteren Ausgabemoduls 220 verbunden. Beispielsweise kann die Motormodulsteuereinheit 32 über den Parametrieranschluss 212 mit einem zweiten Verarbeitungsmodul 218 der Modulsteuerung 110 des zweiten weiteren Ausgabemoduls 220 verbunden sein.

Soweit im Folgenden keine Unterschiede beschrieben werden, ist das zweite Verarbeitungsmodul 218 der Modulsteuerungen 110 der zweiten Ausgabemodule 210, 220 ausgebildet wie das erste Verarbeitungsmodul 118 der Modulsteuerungen 110 der ersten Ausgabemodule 100, 150. Die Modulsteuerung 110 des zweiten weiteren Ausgabemoduls 220 kann mittels der an den Parametrieranschluss 212 angeschlossenen Motormodulsteuereinheit 32 in den ersten Betriebsmodus zur Ansteuerung des elektrischen Motors 2 versetzt werden. Hierzu kann die Modulsteuerung 110 des zweiten weiteren Ausgabemoduls 220 über den Parametrieranschluss 212 einen Parameter empfangen. Der von der Modulsteuerung 110 empfangene Parameter zeigt an, dass an den Ausgang 102 des zweiten weiteren Ausgabemoduls 220 ein als das Motormodul 30 ausgebildetes Modul angeschlossen ist. Bei dem Parameter kann es sich beispielsweise um die Produktbezeichnung des elektrischen Motors 2 bzw. des Motormoduls 30 handeln.

Über den Parametrieranschluss 212 können der Modulsteuerung 110 des zweiten weiteren Ausgabemoduls 220 Kenndaten des Motormoduls 30, insbesondere des elektrischen Motors 2, übermittelt werden. Bei den Kenndaten kann es sich beispielsweise um eine Nennleistung, eine Spitzenleistung, einen Nennstrom oder einen Spitzenstrom des elektrischen Motors 2 handeln. Alternativ oder zusätzlich kann es sich bei den Kenndaten auch um den Widerstand oder die Induktivität der Spulen des elektrischen Motors 2 handeln. Alternativ oder zusätzlich kann die Modulsteuerung 110 des zweiten weiteren Ausgabemoduls 220 in der Motormodulsteuereinheit 32 Daten hinterlegen, beispielsweise eine Kennung, etwa eine Produktbezeichnung oder Seriennummer, des zweiten weiteren Ausgabemoduls 220 oder die von dem Motormodul 30 bereits absolvierten Betriebsstunden. Die Motormodulsteuerung 32 kann damit unter anderem die Funktion eines elektronischen Typenschildes des elektrischen Motors 2 bzw. des Motormoduls 30 bereitstellen.

Bei einer Initialisierung des zweiten Antriebssteuersystems 202, beispielsweise nach einem Einschalten des zweiten Antriebs 200 können die in der Motormodulsteuereinheit 32 des Motormoduls 30 hinterlegten Parameter und Kenndaten durch die Modulsteuerung 110 des zweiten weiteren Ausgabemoduls 220 ausgelesen und verarbeitet werden. Eine Hinterlegung von Parametern oder Kenndaten in der Motormodulsteuereinheit 32 des Motormoduls 30 durch die Modulsteuerung 110 kann beispielsweise durch ein Passwort abgesichert sein. Durch das Passwort sind die in der Motormodulsteuereinheit 32 hinterlegten Parameter oder Kenndaten vor unbefugtem Auslesen oder vor einer unbefugten Änderung geschützt.

Wie das erste Ausgabemodul 100 des ersten Antriebssteuersystems 10 wird das zweite Ausgabemodul 210 des zweiten Antriebssteuersystems 202 in dem zweiten Betriebsmodus der Ausgabemodule 100, 150, 210, 220 betrieben, um elektrische Energie aus dem Gleichspannungszwischenkreis 12 in das Versorgungsnetz 6 zurückzuspeisen. Wie bei dem ersten Antriebssteuersystems 10 sind die Glättungsvorrichtung 21 und die Schaltvorrichtung 24 des Netzadaptermoduls 20 zwischen den Ausgang 102 des zweiten Ausgabemoduls 210 und das Versorgungsnetz 6 geschaltet.

Das Netzadaptermodul 20 weist eine Netzadaptersteuereinheit 26 auf. Die Netzadaptersteuereinheit 26 ist analog ausgebildet zu der Motormodulsteuereinheit 32. Insbesondere kann es sich bei der Netzadaptersteuereinheit 26 um eine elektronische Schaltung mit einer Kommunikationseinrichtung, einer Verarbeitungseinrichtung und einem Speicher handeln. Die Netzadaptersteuereinheit 26 ist an den Parametrieranschluss 212 des zweiten Ausgabemoduls 210 angeschlossen und kommuniziert so mit der Modulsteuerung 110 des zweiten Ausgabemoduls 210. Insbesondere kann die Netzadaptersteuereinheit 26 über den Parametrieranschluss 212 mit dem zweiten Verarbeitungsmodul 218 der Modulsteuerung 110 des zweiten Ausgabemoduls 210 kommunizieren.

In der Netzadaptersteuereinheit 26 sind Parameter hinterlegt, welche das Netzadaptermodul 20, insbesondere die Glättungsvorrichtung 21 und die Schaltvorrichtung 24 des Netzadaptermoduls 20 charakterisieren und die Funktionalität eines elektronischen Typenschildes bereitstellen können. Die Parameter können eine Produktbezeichnung des Netzadaptermoduls 20, eine Induktivität oder einen Widerstand der Speicherdrosseln 22 der Glättungsvorrichtung 21, einen Nennstrom, einen Spitzenstrom, eine Nennleistung oder eine Spitzenleistung des durch das Netzadaptermodul 20 leitbaren Rückspeisestroms umfassen. Alternativ oder zusätzlich können in der Netzadaptersteuereinheit 26 eine Kurzschlussspannung, eine Nenn- oder Bemessungsspannung oder eine Pulsspannung der Speicherdrosseln 22 oder der Schaltvorrichtung 24 hinterlegt sein. Auch kann eine durch die Induktivität der Speicherdrosseln 22 vorgegebene Zeitkonstante, ein Toleranzbereich der Induktivität der Speicherdrosseln 22, sowie eine Bemessungsfrequenz des Netzadaptermoduls 20 als Parameter hinterlegt sein. Handelt es sich bei den Speicherdrosseln 22 um Spulen mit einem Eisenkern, so können auch Kenndaten des Eisenkerns als Parameter in der Netzadaptersteuereinheit 26 hinterlegt sein.

Die Modulsteuerung 110 des zweiten Ausgabemoduls 210 ist dazu ausgebildet, über einen der in dem Netzadaptermodul 20 hinterlegten und über den Parametrieranschluss 212 übermittelten Parameter in den zweiten Betriebsmodus versetzt zu werden. Bei diesem Parameter kann es sich beispielsweise um die Produktbezeichnung des Netzadaptermoduls 20 handeln. Die in der Netzadaptersteuereinheit 26 hinterlegten Parameter können beispielsweise bei einer Initialisierung des zweiten Ausgabemoduls 210 nach einem Einschalten des zweiten Antriebssteuersystems 202 an die Modulsteuerung 110 übertragen werden.

Während des Betriebs des zweiten Antriebssteuersystems 202 können zwischen der Modulsteuerung 110 des zweiten Ausgabemoduls 210 und der Netzadaptersteuereinheit 26 des Netzadaptermoduls 20 Betriebsdaten ausgetauscht werden. Ein derartiger Datenaustausch kann beispielsweise zyklisch erfolgen. Bei den Betriebsdaten kann es sich beispielsweise um den Schaltzustand der Schaltvorrichtung 24 oder um die Temperatur der Glättungsvorrichtung 21 oder anderer Bauteile des Netzadaptermoduls 20 handeln. Die Betriebsdaten können auch einen Status des Netzadaptermoduls 20 umfassen, welcher angibt, ob das Netzadaptermodul 20 bereit ist, einen Rückspeisestrom zu übertragen oder ob ein Fehler des Netzadaptermoduls 20 vorliegt.

Wie bei der Motormodulsteuereinheit 32 des Motormoduls 30 können die in der Netzadaptersteuereinheit 26 des Netzadaptermoduls 20 hinterlegten Parameter durch das zweite Ausgabemodul 210 verändert werden, oder es können durch das zweite Ausgabemodul 210 weitere Parameter in der Netzadaptersteuereinheit 26 hinterlegt werden. Bei den weiteren Parametern kann es sich um die von dem Netzadaptermodul 20 bereits absolvierten Betriebsstunden handeln.

Auch kann das zweite Ausgabemodul 210 eine eigene Modulkennung in der Netzadaptersteuereinheit 26 des Netzadaptermoduls 20 hinterlegen. Diese Hinterlegung kann beispielsweise bei einem erstmaligen Anschluss des Netzadaptermoduls 20 an den Parametrieranschluss 212 des zweiten Ausgabemoduls 210 erfolgen. Wie bei dem zweiten weiteren Ausgabemodul 220 und dem Motormodul 30 können die in der Netzadaptersteuereinheit 26 des Netzadaptermoduls 20 hinterlegten Parameter passwortgeschützt sein. Über die zweiten Ausgabemodule 210, 220, genauer über deren Modulsteuerungen 110 und die Parametriereingänge 212, kann auch die übergeordnete Steuereinheit 8 auf die Netzadaptersteuereinheit 26 oder die Motormodulsteuereinheit 32, insbesondere auf die in den Steuereinheiten 26, 32 hinterlegten Parameter, zugreifen und diese Parameter ändern.

Die zweiten Ausgabemodule 210, 220 können auch dazu ausgebildet sein, die über die Ausgänge 102 ausgegebene elektrische Leistung zu überwachen und unter Verwendung der Kenndaten des elektrischen Motors 2 oder des Netzadaptermoduls 20 eine insgesamt aufgetretene Belastung des Motors 2 oder des Netzadaptermoduls 20 zu ermitteln und zu protokollieren. Die bisherige Belastung des Motors 2 oder des Netzadaptermoduls 20 kann, beispielsweise zu Servicezwecken, in den Steuereinheiten 26, 32 des Motormoduls 30 bzw. des Netzadaptermoduls 20 hinterlegt werden.

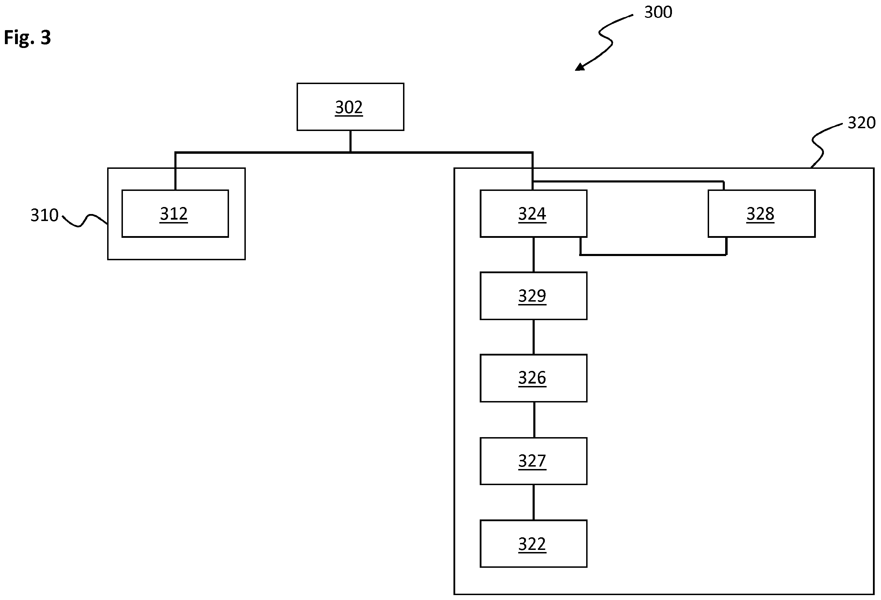

**Figur** 3 zeigt eine schematische Ablaufskizze eines Verfahrens 300 zum Betrieb der Antriebssteuerungssysteme 10, 202 für die elektrischen Antriebe 1, 200.

Als einen ersten Schritt umfasst das Verfahren ein Überprüfen 302 des Betriebsmodus der Ausgabemodule 100, 150, 210, 220. Das Überprüfen 302 des Betriebsmodus kann beispielsweise bei einer Initialisierung der Ausgabemodule 100, 150, 210, 220 erfolgen, beispielsweise nach einem Einschalten der Antriebssteuersysteme 10, 202.

Wird, wie beispielsweise bei den zuvor beschriebenen ersten oder zweiten weiteren Ausgabemodulen 150, 220, bei dem Überprüfen 302 des Betriebsmodus ein erster Betriebsmodus 310 festgestellt, so erfolgt im Betrieb ein Ansteuern 312 des Frequenzumrichters 108 durch die Modulsteuerung 110 des betreffenden Ausgabemoduls 100, 150, 210, 220 derart, dass ein an den Ausgang 102 des betreffenden Ausgabemoduls 100, 150, 210, 220 angeschlossener elektrischer Motor 2 mit einem Antriebsstrom aus dem Gleichspannungszwischenkreis 12 versorgt wird. Dieses Ansteuern 312 wird näher im Zusammenhang mit den Figuren 1 und 2 beschrieben. Es kann auch eine Ansteuerung des Frequenzumrichters 108 in einer Weise umfassen, dass der elektrische Motor 2 generatorisch belastet wird und der Antriebsstrom als negativer Ausgangsstrom in das betreffende Ausgabemodul 100, 150, 210, 220 fließt und elektrische Energie in den Gleichspannungszwischenkreis 12 einspeist.

Wird, wie bei den ersten oder zweiten Ausgabemodulen 100, 210, ein zweiter Betriebsmodus 320 festgestellt, erfolgt durch die Modulsteuerung 110 des betreffenden Ausgabemoduls 100, 150, 210, 220 ein Ansteuern 322 der Frequenzumrichter 108 derart, dass über den Ausgang 102 ein elektrischer Rückspeisstrom aus dem Gleichspannungszwischenkreis 12 in das Versorgungsnetz 6 zurückgespeist wird. Die Ansteuerung 322 zur Rückspeisung wird ebenfalls im Zusammenhang mit den Figuren 1 und 2 näher erläutert.

Die Antriebssteuersysteme 10, 202 können dazu ausgebildet sein, dass die Zwischenkreisspannung während des Betriebs in gewissen Bereichen variabel sein kann. Beispielsweise kann vorgesehen sein, dass die Zwischenkreisspannung zwischen einem Minimalwert und einem Maximalwert schwankt. Der Minimalwert und der Maximalwert können beispielsweise bei 300V und 1800V, insbesondere bei 450V und 900V liegen. Der Maximalwert kann auch die obere Grenzspannung darstellen, ab der elektrische Energie aus dem Gleichspannungszwischenkreis 12 in das Versorgungsnetz 6 zurückgespeist wird. Die obere Grenzspannung kann aber auch unter dem Maximalwert liegen.

Das Ansteuern 322 zur Rückspeisung kann immer dann erfolgen, wenn die Zwischenkreisspannung die obere Grenzspannung überschreitet. Hierzu kann das Verfahren 300, falls der zweite Betriebsmodus 320 festgestellt wurde, ein Vergleichen 324 der Spannung des Gleichspannungszwischenkreises 12 mit der oberen Grenzspannung umfassen. Sollte die Zwischenkreisspannung kleiner sein als die obere Grenzspannung, so erfolgt keine Rückspeisung in das Versorgungsnetz 6. Sollte die Zwischenkreisspannung größer sein als die obere Grenzspannung, so beginnt das erste oder zweite Ausgabemodul 100, 210 mit der Ansteuerung 322 des Frequenzumrichters 108 zur Rückspeisung.

Die Rückspeisung kann beendet werden, wenn die Zwischenkreisspannung wieder unter die obere Grenzspannung gefallen ist. Beispielsweise kann die Rückspeisung nach Art einer Zweipunktregelung beendet werden, sobald die Zwischenkreisspannung um eine vorgegebene Differenzspannung niedriger ist als die obere Grenzspannung. Die vorgegebene Differenzspannung kann kleiner sein als die Differenz zwischen dem Maximalwert und dem Minimalwert der Zwischenkreisspannung oder sie kann dieser Differenz entsprechen.

Die Ausgabemodule 100, 150, 210, 220 können dazu ausgebildet sein, dass im zweiten Betriebsmodus 320 die Ansteuerung des Frequenzumrichters 108 zur Rückspeisung alleine über das Strommesssignal 122 mit der Wechselspannung des Versorgungsnetzes 6 synchronisiert wird. Das Verfahren 300 kann als weitere Schritte nach dem Überprüfen 302 des Betriebsmodus 310, 320 und dem Vergleichen 324 der Zwischenkreisspannung mit der oberen Grenzspannung ein Erzeugen 326 des Strommesssignals 122 umfassen. Außerdem kann das Verfahren 300 ein Synchronisieren 327 der Ansteuerung des Frequenzumrichters 108 mit dem Versorgungsnetz 6 auf Grundlage des Strommesssignals 122 umfassen. Dies wird im Zusammenhang mit den Figuren 1 und 2 näher beschrieben.

Zur Ansteuerung der Schaltvorrichtung 24 und um zu vermeiden, dass bei niedriger Zwischenkreisspannung das Versorgungsnetz 6 über den Frequenzumrichter 108 kurzgeschlossen wird, kann das Verfahren 300 als weiteren Schritt ein Trennen 328 des Ausgangs 102 der ersten oder zweiten Ausgabemodule 100, 210 von dem Versorgungsnetz 6 über die Schaltvorrichtung 24 umfassen. Das Trennen 328 kann immer dann stattfinden, wenn die Spannung des Gleichspannungszwischenkreises 12 die untere Grenzspannung unterschreitet.

Die untere Grenzspannung kann derart bemessen sein, dass die ersten oder zweiten Ausgabemodule 100, 210 lediglich dann über die Schaltvorrichtung 24 mit dem Versorgungsnetz 6 verbunden werden, wenn Energie aus dem Gleichspannungszwischenkreis 12 zurückgespeist wird. Alternativ kann die untere Grenzspannung auch derart bemessen sein, dass die ersten oder zweiten Ausgabemodule 100, 210 immer dann von dem Versorgungsnetz 6 getrennt werden, wenn Gefahr eines Kurzschlusses des Versorgungsnetzes 6 über den Frequenzumrichter 108 und den Gleichspannungszwischenkreis 12 besteht. Beispielsweise kann die untere Grenzspannung im Wesentlichen der Spannungsamplitude der Wechselspannung des Versorgungsnetzes 6 entsprechen.

In jedem Fall umfasst das Verfahren 300 ein Verbinden 329 des Ausgangs 102 der ersten oder zweiten Ausgabemodule 100, 210 mit dem Versorgungsnetz 6, ehe Energie aus dem Gleichspannungszwischenkreis 12 in das Versorgungsnetz 6 zurückgespeist wird. Je nach Wert der unteren Grenzspannung kann dies entweder unmittelbar vor Beginn der Rückspeisung oder bereits dann erfolgen, wenn nach einem Anschalten der Antriebssteuersysteme 10, 202 die Zwischenkreisspannung über die Spannungsamplitude des Versorgungsnetzes 6 angestiegen ist. Außerdem erfolgt bei dem Verfahren 300 während des Einschaltens des Antriebssteuersystems 10, 202 und bis zum vollständigen Aufbau des Zwischenkreisspannung auf einen Wert, der größer ist als die Spannungsamplitude des Versorgungsnetzes 6, das Trennen 328 der ersten oder zweiten Ausgabemodule 100, 210 von dem Versorgungsnetz 6.

Die ersten oder zweiten Ausgabemodule 100, 210, die im zweiten Betriebsmodus 320 als Rückspeisemodule betrieben werden, ermöglichen es, die Zwischenkreisspannung mittels einer geregelten Rückspeisung flexibel anzupassen. Beispielsweise ist eine kurzzeitige Anhebung der Spannung im Gleichspannungszwischenkreis 12 möglich, um eine Spitzendrehzahl des an die Antriebssteuersysteme 10, 202 angeschlossenen Motors 2 abzurufen. Auch ist mittels der Ausgabemodule 100, 210 eine geregelte Stabilisierung der Zwischenkreisspannung möglich.

Die Rückspeisung über den Frequenzumrichter 108 der ersten oder zweiten Ausgabemodule 100, 210 kann auch derart geregelt werden, dass eine Leistungsfaktorkorrektur des an das Versorgungsnetz 6 angeschlossenen Antriebssteuersystems 10, 202 erfolgt. Dadurch kann beispielsweise die von dem Antriebssteuersystem 10, 202 aufgenommene Blindleistung minimiert und die Lastart (induktiv oder kapazitiv) des Antriebssteuersystems 10, 202 angepasst werden.

### Bezugszeichenliste

- 1: erster Antrieb
- 2: elektrischer Motor
- 4: Bremse
- 6: elektrisches Versorgungsnetz
- 8: übergeordnete Steuereinheit
- 9: Datennetzwerk
- 10: erstes Antriebssteuersystem
- 12: Gleichspannungs-Zwischenkreis
- 13: oberer Potentialpunkt
- 14: unterer Potentialpunkt
- 15: Zwischenkreiskondensator
- 20: Netzadaptermodul
- 21: Glättungsvorrichtung
- 22: Speicherdrossel
- 24: Schaltvorrichtung
- 25: Schalter
- 26: Netzadaptersteuereinheit
- 30: Motormodul
- 32: Motormodulsteuereinheit
- 40: Einspeisemodul
- 41: Einspeisemodulsteuerung
- 42: Gleichrichter
- 44: Ladeschaltung
- 45: Widerstand
- 46: Schalter
- 100: erstes Ausgabemodul
- 102: Ausgang
- 104: Steuerausgang
- 108: Frequenzumrichter
- 110: Modulsteuerung
- 112: Stromregelmodul
- 114: Drehzahlregelmodul
- 116: Rückspeiseregelmodul
- 118: erstes Verarbeitungsmodul
- 120: Strommessmodul
- 122: Strommesssignal
- 123: Sollstromwert
- 124: Spannungsmessmodul
- 150: erstes weiteres Ausgabemodul

- 200: zweiter Antrieb
- 202: zweites Antriebssteuersystem
- 210: zweites Ausgabemodul
- 212: Parametrieranschluss
- 218: zweites Verarbeitungsmodul
- 220: zweites weiteres Ausgabemodul

- 300: Verfahren
- 302: Überprüfen eines Betriebsmodus
- 310: erster Betriebsmodus
- 312: Ansteuern des Frequenzumrichters für Motorantrieb
- 320: zweiter Betriebsmodus
- 322: Ansteuern des Frequenzumrichters für Rückspeisung
- 324: Vergleichen mit oberer Grenzspannung
- 326: Erzeugen eines Strommesssignals
- 327: Synchronisieren des Reglers
- 328: Trennen des Ausgangs des Ausgabemoduls
- 329: Verbinden des Ausgangs des Ausgabemoduls

## Patentansprüche

1. Antriebssteuersystem (10, 202) für einen Antrieb (1, 200) mit einem elektrischen Motor (2) umfassend
einen Gleichspannungszwischenkreis, ein Einspeisemodul (40), ein erstes Ausgabemodul (100, 150, 210, 220) zur Ausgabe eines Antriebsstroms und eines Rückspeisestroms und ein zweites Ausgabemodul (100, 150, 210, 220) zur Ausgabe eines Antriebsstroms und eines Rückspeisestroms,
wobei das erste Ausgabemodul (100, 150, 210, 220) einen ersten Wechselrichter (108), einen ersten Ausgang (102) und eine erste Modulsteuerung (110) zur Ansteuerung des ersten Wechselrichters (108) umfasst,
wobei das zweite Ausgabemodul (100, 150, 210, 220) einen zweiten Wechselrichter (108), einen zweiten Ausgang (102) und eine zweite Modulsteuerung (110) zur Ansteuerung des zweiten Wechselrichters (108) umfasst,
wobei das erste und das zweite Ausgabemodul (100, 150, 210, 220) jeweils einen ersten Betriebsmodus (310) und einen zweiten Betriebsmodus (320) aufweisen,
wobei die Modulsteuerungen (110) der Ausgabemodule (100, 150, 210, 220) jeweils dazu ausgebildet sind, in dem ersten Betriebsmodus (310) der Ausgabemodule (100, 150, 210, 220) einen Sollstromwert (123) für den Antriebsstrom für den elektrischen Motor (2) zu erzeugen und den Wechselrichter (108) des betreffenden Ausgabemoduls (100, 150, 210, 220) derart anzusteuern, dass über den Ausgang (102) des betreffenden Ausgabemoduls (100, 150, 210, 220) der elektrische Motor (2) mit dem Antriebsstrom aus dem an das betreffende Ausgangsmodul (100, 150, 210, 220) angeschlossenen Gleichspannungszwischenkreis (12) angetrieben wird,
wobei die Modulsteuerungen (110) der Ausgabemodule (100, 150, 210, 220) jeweils dazu ausgebildet sind, in dem zweiten Betriebsmodus (320) der Ausgabemodule (100, 150, 210, 220) einen Sollstromwert (123) für den in ein Versorgungsnetz (6) einzuspeisenden Rückspeisestrom zu erzeugen und den Wechselrichter (108) des betreffenden Ausgabemoduls (100, 150, 210, 220) derart anzusteuern, dass über den Ausgang (102) des betreffenden Ausgabemoduls (100, 150, 210, 220) der Rückspeisestrom aus dem an das betreffende Ausgangsmodul (100, 150, 210, 220) angeschlossenen Gleichspannungszwischenkreis (12) in das elektrische Versorgungsnetz (6) zurückgespeist wird,
wobei das Einspeisemodul (40) mit dem elektrischen Versorgungsnetz (6) verbindbar und dem Gleichspannungszwischenkreis (12) des Antriebssteuersystems (10, 202) verbunden und dazu ausgebildet ist, den Gleichspannungszwischenkreis (12) mit elektrischer Energie aus dem Versorgungsnetz (6) zu versorgen,
wobei die Modulsteuerung (110) dazu ausgebildet ist, in dem zweiten Betriebsmodus (320) den als einen Ausgangsstrom über den Ausgang (102) fließenden Rückspeisestrom auf der Grundlage eines, den über den Ausgang (102) fließenden Ausgangsstrom repräsentierenden Strommesssignals (122) mit dem elektrischen Versorgungsnetz (6) zu synchronisieren,
wobei der erste Wechselrichter (108) des ersten Ausgabemoduls (100, 150, 210, 220) zwischen den Gleichspannungszwischenkreis (12) und den ersten Ausgang (102) und der zweite Wechselrichter (108) des zweiten Ausgabemoduls (100, 150, 210, 220) zwischen den Gleichspannungszwischenkreis (12) und den zweiten Ausgang (102) geschaltet ist,
wobei der erste Ausgang (102) des ersten Ausgabemoduls (100, 150, 210, 220) mit dem elektrischen Motor (2) des Antriebs (1, 200) und der zweite Ausgang (102) des zweiten Ausgabemoduls (100, 150, 210, 220) mit dem Versorgungsnetz (6) verbindbar ist,
wobei das erste Ausgabemodul (100, 150, 210, 220) derart parametriert ist, dass es in dem ersten Betriebsmodus (310) betrieben wird und den elektrischen Motor (2) des Antriebs (1, 200) mit einem Antriebsstrom aus dem Versorgungsnetz (6) antreibt,
wobei das zweite Ausgabemodul (100, 150, 210, 220) derart parametriert ist, dass es in dem zweiten Betriebsmodus (320) betrieben wird und einen elektrischen Rückspeisestrom aus dem Gleichspannungszwischenkreis (12) in das Versorgungsnetz (6) zurückspeist.

2. Antriebssteuersystem (10, 202) gemäß Anspruch 1,
mit einer zwischen den zweiten Ausgang (102) des zweiten Ausgabemoduls (100, 150, 210, 220) und das Versorgungsnetz (6) geschalteten Glättungsvorrichtung (21), um den über das zweite Ausgabemodul (100, 150, 210, 220) im zweiten Betriebsmodus (320) in das Versorgungsnetz (6) zurückgespeisten elektrischen Rückspeisestrom zu glätten.

3. Antriebssteuersystem (10, 202)gemäß Anspruch 1 oder 2,
mit einer zwischen den zweiten Ausgang (102) des zweiten Ausgabemoduls (100, 150, 210, 220) und das Versorgungsnetz (6) geschalteten Schaltvorrichtung (24), um den zweiten Ausgang (102) des zweiten Ausgabemoduls (100, 150, 210, 220) von dem Versorgungsnetz (6) zu trennen.

4. Antriebssteuersystem (10, 202) gemäß Anspruch 3,
wobei die Schaltvorrichtung (24) zur Ansteuerung mit einem Steuerausgang (104) des zweiten Ausgabemoduls (100, 150, 210, 220) verbunden ist.

5. Antriebssteuersystem (10, 202) gemäß einem der Ansprüche 1 bis 4,
wobei die erste Modulsteuerung (110) dazu ausgebildet ist, in dem ersten Betriebsmodus (310) über einen Steuerausgang (104) des ersten Ausgabemoduls (100, 150, 210, 220) eine Bremse (4) des elektrischen Antriebs (1, 200) zu steuern.

6. Antriebssteuersystem (10, 202) gemäß einem der Ansprüche 1 bis 5,
mit einem Netzadaptermodul (20) für das zweite Ausgabemodul (100, 150, 210, 220), das mit einem von dem zweiten Ausgabemodul (100, 150, 210, 220) getrennten Gehäuse ausgeführt ist, mit einer zwischen den Ausgang (102) des Ausgabemoduls (100, 150, 210, 220) und das Versorgungsnetz (6) zu schaltenden Glättungsvorrichtung (21), um den über das Ausgabemodul (100, 150, 210, 220) im zweiten Betriebsmodus (320) in das Versorgungsnetz (6) zurückgespeisten Rückspeisestrom zu glätten, und
mit einem an einen Parametrieranschluss (212) des zweiten Ausgabemoduls (100, 150, 210, 220) anschließbaren Netzadaptersteuermodul (26),
wobei das Netzadaptersteuermodul (26) dazu ausgebildet ist, einen das Netzadaptermodul (20) charakterisierenden Parameter an das zweite Ausgabemodul (100, 150, 210, 220) zu übermitteln.

7. Antriebssteuersystem (10, 202) gemäß Anspruch 6,
wobei das Netzadaptermodul (20) ausgeführt ist, mit einer zwischen den Ausgang (102) des zweiten Ausgabemoduls (100, 150, 210, 220) und das Versorgungsnetz (6) zu schaltenden Schaltvorrichtung (24), um den Ausgang (102) des zweiten Ausgabemoduls (100, 150, 210, 220) von dem Versorgungsnetz (6) zu trennen,
wobei die Schaltvorrichtung (24) über einen Steuerausgang (104) des Ausgabemoduls (100, 150, 210, 220) ansteuerbar ist.

8. Antrieb (1, 200) mit dem Antriebssteuersystem (10, 202) gemäß einem der Ansprüche 1 bis 7 und einem elektrischen Motor (2), der mit dem ersten Ausgang des ersten Ausgangsmoduls verbunden ist.

## Claims

1. Drive control system (10, 202) for a drive (1, 200) having an electric motor (2) comprising a DC voltage intermediate circuit, a supply module (40), a first output module (100, 150, 210, 220) for outputting a drive current and a feedback current and a second output module (100, 150, 210, 220) for outputting a drive current and a feedback current,
wherein the first output module (100, 150, 210, 220) comprises a first inverter (108), a first output (102) and a first module controller (110) for driving the first inverter (108),
wherein the second output module (100, 150, 210, 220) comprises a second inverter (108), a second output (102) and a second module controller (110) for driving the second inverter (108),
wherein the first and the second output module (100, 150, 210, 220) each have a first operating mode (310) and a second operating mode (320),
wherein the module controllers (110) of the output modules (100, 150, 210, 220) are each designed, in the first operating mode (310) of the output modules (100, 150, 210, 220), to generate a setpoint current value (123) for the drive current for the electric motor (2) and to drive the inverter (108) of the output module (100, 150, 210, 220) in question such that the electric motor (2) is driven with the drive current from the DC voltage intermediate circuit (12) connected to the output module (100, 150, 210, 220) in question via the output (102) of the output module (100, 150, 210, 220) in question,
wherein the module controllers (110) of the output modules (100, 150, 210, 220) are each designed, in the second operating mode (320) of the output modules (100, 150, 210, 220), to generate a setpoint current value (123) for the feedback current to be supplied to a supply grid (6) and to actuate the inverter (108) of the output module (100, 150, 210, 220) in question such that the feedback current is fed back from the DC voltage intermediate circuit (12) connected to the output module (100, 150, 210, 220) in question to the electricity supply grid (6) via the output (102) of the output modules (100, 150, 210, 220) in question,
wherein the supply module (40) is able to be connected to the electricity supply grid (6) and is connected to the DC voltage intermediate circuit (12) of the drive control system (10, 202) and is designed to supply electric power from the supply grid (6) to the DC voltage intermediate circuit (12),
wherein the module controller (110) is designed, in the second operating mode (320), to synchronize the feedback current flowing as an output current via the output (102) with the electricity supply grid (6) on the basis of a current measurement signal (122) representing the output current flowing via the output (102),
wherein the first inverter (108) of the first output module (100, 150, 210, 220) is connected between the DC voltage intermediate circuit (12) and the first output (102) and the second inverter (108) of the second output module (100, 150, 210, 220) is connected between the DC voltage intermediate circuit (12) and the second output (102),
wherein the first output (102) of the first output module (100, 150, 210, 220) is able to be connected to the electric motor (2) of the drive (1, 200) and the second output (102) of the second output module (100, 150, 210, 220) is able to be connected to the supply grid (6), wherein the first output module (100, 150, 210, 220) is parameterized such that it is operated in the first operating mode (310) and drives the electric motor (2) of the drive (1, 200) with a drive current from the supply grid (6),
wherein the second output module (100, 150, 210, 220) is parameterized such that it is operated in the second operating mode (320) and feeds an electric feedback current from the DC voltage intermediate circuit (12) back into the supply grid (6).

2. Drive control system (10, 202) according to Claim 1,
having a smoothing device (21) connected between the second output (102) of the second output module (100, 150, 210, 220) and the supply grid (6) in order to smooth the electric feedback current fed back into the supply grid (6) via the second output module (100, 150, 210, 220) in the second operating mode (320).

3. Drive control system (10, 202) according to Claim 1 or 2,
having a switching device (24) connected between the second output (102) of the second output module (100, 150, 210, 220) and the supply grid (6) in order to disconnect the second output (102) of the second output module (100, 150, 210, 220) from the supply grid (6).

4. Drive control system (10, 202) according to Claim 3,
wherein the switching device (24) is connected to a control output (104) of the second output module (100, 150, 210, 220) in order to be driven.

5. Drive control system (10, 202) according to one of Claims 1 to 4,
wherein the first module controller (110) is designed, in the first operating mode (310), to drive a brake (4) of the electric drive (1, 200) via a control output (104) of the first output module (100, 150, 210, 220).

6. Drive control system (10, 202) according to one of Claims 1 to 5,
having a grid adapter module (20) for the second output module (100, 150, 210, 220) that is designed with a housing separate from the second output module (100, 150, 210, 220),
having a smoothing device (21) to be switched between the output (102) of the output module (100, 150, 210, 220) and the supply grid (6) in order to smooth the feedback current fed back into the supply grid (6) via the output module (100, 150, 210, 220) in the second operating mode (320), and
having a grid adapter control module (26) able to be connected to a parameterization terminal (212) of the second output module (100, 150, 210, 220),
wherein the grid adapter control module (26) is designed to transmit a parameter characterizing the grid adapter module (20) to the second output module (100, 150, 210, 220) .

7. Drive control system (10, 202) according to Claim 6,
wherein the grid adapter module (20) is designed with a switching device (24) to be switched between the output (102) of the second output module (100, 150, 210, 220) and the supply grid (6) in order to disconnect the output (102) of the second output module (100, 150, 210, 220) from the supply grid (6),
wherein the switching device (24) is able to be driven via a control output (104) of the output module (100, 150, 210, 220).

8. Drive (1, 200) having a drive control system (10, 202) according to one of Claims 1 to 7 and an electric motor (2) that is connected to the first output of the first output module.

## Revendications

1. Système de commande d'entraînement (10, 202) pour un mécanisme d'entraînement (1, 200) doté d'un moteur électrique (2), comprenant un circuit intermédiaire à tension continue, un module d'injection (40), un premier module de sortie (100, 150, 210, 220) destiné à délivrer un courant d'entraînement et un courant de retour et un deuxième module de sortie (100, 150, 210, 220) destiné à délivrer un courant d'entraînement et un courant de retour, le premier module de sortie (100, 150, 210, 220) comportant un premier onduleur (108), une première sortie (102) et une première commande de module (110) destinée à commander le premier onduleur (108),
le deuxième module de sortie (100, 150, 210, 220) comportant un deuxième onduleur (108), une deuxième sortie (102) et une deuxième commande de module (110) destinée à commander le deuxième onduleur (108),
le premier et le deuxième module de sortie (100, 150, 210, 220) possédant respectivement un premier mode de fonctionnement (310) et un deuxième mode de fonctionnement (320),
les commandes de module (110) des modules de sortie (100, 150, 210, 220) étant respectivement configurées pour, dans le premier mode de fonctionnement (310) des modules de sortie (100, 150, 210, 220), générer une valeur de courant de consigne (123) pour le courant d'entraînement pour le moteur électrique (2) et commander l'onduleur (108) du module de sortie (100, 150, 210, 220) concerné de telle sorte que le moteur électrique (2) est entraîné par le biais de la sortie (102) du module de sortie (100, 150, 210, 220) concerné avec le courant d'entraînement en provenance du circuit intermédiaire à tension continue (12) raccordé au module de sortie (100, 150, 210, 220) concerné,
les commandes de module (110) des modules de sortie (100, 150, 210, 220) étant respectivement configurées pour, dans le deuxième mode de fonctionnement (320) des modules de sortie (100, 150, 210, 220), générer une valeur de courant de consigne (123) pour le courant de retour à injecter dans un réseau d'alimentation (6) et commander l'onduleur (108) du module de sortie (100, 150, 210, 220) concerné de telle sorte que le courant de retour en provenance du circuit intermédiaire à tension continue (12) raccordé au module de sortie (100, 150, 210, 220) concerné est réinjecté dans le réseau d'alimentation (6) électrique par le biais de la sortie (102) du modules de sortie (100, 150, 210, 220) concerné,
le module d'injection (40) pouvant être raccordé au réseau d'alimentation (6) électrique et étant relié au circuit intermédiaire à tension continue (12) du système de commande d'entraînement (10, 202) et configuré pour alimenter le circuit intermédiaire à tension continue (12) avec de l'énergie électrique en provenance du réseau d'alimentation (6) électrique,
la commande de module (110) étant configurée pour, dans le deuxième mode de fonctionnement (320), synchroniser le courant de retour qui s'écoule comme un courant de sortie par le biais de la sortie (102) avec le réseau d'alimentation (6) électrique sur la base d'un signal de mesure de courant (122) qui représente le courant de sortie qui s'écoule par le biais de la sortie (102),
le premier onduleur (108) du premier module de sortie (100, 150, 210, 220) étant branché entre le circuit intermédiaire à tension continue (12) et la première sortie (102) et le deuxième onduleur (108) du deuxième module de sortie (100, 150, 210, 220) entre le circuit intermédiaire à tension continue (12) et la deuxième sortie (102),
la première sortie (102) du premier module de sortie (100, 150, 210, 220) pouvant être raccordée au moteur électrique (2) du mécanisme d'entraînement (1, 200) et la deuxième sortie (102) du deuxième module de sortie (100, 150, 210, 220) au réseau d'alimentation (6),
le premier module de sortie (100, 150, 210, 220) étant paramétré de telle sorte qu'il fonctionne dans le premier mode de fonctionnement (310) et entraîne le moteur électrique (2) du mécanisme d'entraînement (1, 200) avec un courant d'entraînement en provenance du réseau d'alimentation (6),
le deuxième module de sortie (100, 150, 210, 220) étant paramétré de telle sorte qu'il fonctionne dans le deuxième mode de fonctionnement (320) et réinjecte dans le réseau d'alimentation (6) un courant de retour électrique en provenance du circuit intermédiaire à tension continue (12).

2. Système de commande d'entraînement (10, 202) selon la revendication 1, comprenant un dispositif de lissage (21) branché entre la deuxième sortie (102) du deuxième module de sortie (100, 150, 210, 220) et le réseau d'alimentation (6), afin de lisser le courant de retour électrique réinjecté dans le réseau d'alimentation (6) par le biais du deuxième module de sortie (100, 150, 210, 220) dans le deuxième mode de fonctionnement (320).

3. Système de commande d'entraînement (10, 202) selon la revendication 1 ou 2, comprenant un dispositif de commutation (24) branché entre la deuxième sortie (102) du deuxième module de sortie (100, 150, 210, 220) et le réseau d'alimentation (6), afin de séparer la deuxième sortie (102) du deuxième module de sortie (100, 150, 210, 220) du réseau d'alimentation (6).

4. Système de commande d'entraînement (10, 202) selon la revendication 3, comprenant un dispositif de commutation (24), pour la commande, étant relié à une sortie de commande (104) du deuxième module de sortie (100, 150, 210, 220).

5. Système de commande d'entraînement (10, 202) selon l'une des revendications 1 à 4, la première commande de module (110) étant configurée pour, dans le premier mode de fonctionnement (310), commander un frein (4) du mécanisme d'entraînement (1, 200) électrique par le biais d'une sortie de commande (104) du premier module de sortie (100, 150, 210, 220).

6. Système de commande d'entraînement (10, 202) selon l'une des revendications 1 à 5, comprenant un module adaptateur de réseau (20) pour le deuxième module de sortie (100, 150, 210, 220), lequel est réalisé avec un boîtier séparé du deuxième module de sortie (100, 150, 210, 220), comprenant un dispositif de lissage (21) à brancher entre la sortie (102) du module de sortie (100, 150, 210, 220) et le réseau d'alimentation (6), afin de lisser le courant de retour électrique réinjecté dans le réseau d'alimentation (6) par le biais du module de sortie (100, 150, 210, 220) dans le deuxième mode de fonctionnement (320),
et
comprenant un module de commande d'adaptateur de réseau (26) pouvant être raccordé à une borne de paramétrage (212) du deuxième module de sortie (100, 150, 210, 220), le module de commande d'adaptateur de réseau (26) étant configuré pour communiquer au deuxième module de sortie (100, 150, 210, 220) un paramètre qui caractérise le module adaptateur de réseau (20).

7. Système de commande d'entraînement (10, 202) selon la revendication 6, le module adaptateur de réseau (20) étant réalisé avec un dispositif de commutation (24) à brancher entre la sortie (102) du deuxième module de sortie (100, 150, 210, 220) et le réseau d'alimentation (6), afin de séparer la sortie (102) du deuxième module de sortie (100, 150, 210, 220) du réseau d'alimentation (6),
le dispositif de commutation (24) pouvant être commandé par le biais d'une sortie de commande (104) du module de sortie (100, 150, 210, 220).

8. Mécanisme d'entraînement (1, 200) comprenant le système de commande d'entraînement (10, 202) selon l'une des revendications 1 à 7 et un moteur électrique (2) qui est relié à la première sortie du premier module de sortie.
